# EUROPÄISCHE PATENTSCHRIFT

(11) **EP 2 406 588 B1**
(45) Veröffentlichungstag und Bekanntmachung des Hinweises auf die Patenterteilung: **16.12.2020**
(21) Anmeldenummer: 10707899.0
(22) Anmeldetag: 09.03.2010
(51) Int. Cl.: G01F 15/02, G01F 25/00, G01F 1/84

(54) **MEßAUFNEHMER VOM VIBRATIONSTYP SOWIE IN-LINE-MESSGERÄT MIT EINEM SOLCHEN MESSAUFNEHMER**
VIBRATION SENSOR AND IN-LINE MEASURING DEVICE COMPRISING SAID SENSOR
CAPTEUR DE MESURE À VIBRATION ET INSTRUMENT DE MESURE EN LIGNE MUNI D'UN TEL CAPTEUR DE MESURE

(30) Priorität: 11.03.2009 DE 102009001472
(43) Veröffentlichungstag der Anmeldung: 18.01.2012
(73) Patentinhaber: Endress+Hauser Flowtec AG, 4153 Reinach (CH)
(72) Erfinder: ANKLIN-IMHOF, Martin, CH-4143 Dornach (CH); BITTO, Ennio, CH-4147 Aesch (CH); HUBER, Christof, 3012 Bern (CH); RIEDER, Alfred, 84032 Landshut (DE)
(74) Vertreter: Andres, Angelika Maria
(86) Internationale Anmeldenummer: PCT/EP2010/052972
(87) Internationale Veröffentlichungsnummer: WO 2010/102999

(56) Entgegenhaltungen:
- EP-A1- 0 119 638
- EP-A1- 2 159 552
- WO-A2-96/08697
- US-A- 5 230 254

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 2200 t/h, insb. mehr als 2500 t/h, strömenden Mediums. Ferner betrifft die Erfindung ein In-line-Meßgerät mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/ Dichtemesser ausgebildete, Meßaufnehmer sind z.B. in der EP-A 1 001 254, der EP-A 553 939, der US-A 47 93 191, der US-A 2002/0157479, der US-A 2006/0150750, der US-A 2007/0151368, der US-A 53 70 002, der US-A 57 96 011, der US-B 63 08 580, der US-B 64 15 668, der US-B 67 11 958, der US-B 69 20 798, der US-B 71 34 347, der US-B 73 92 709, der WO-A 96/08697 oder der WO-A 03/027616 der ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011, der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet.

Zum Führen des zumindest zeitweise strömenden Mediums umfassen die Meßaufnehmer desweiteren jeweils genau zwei strömungstechnisch parallel geschaltete Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung im Falle gerader Meßrohre derart ausgebildet, daß damit die beiden Meßrohre im Nutzmode zumindest anteilig, insb. auch überwiegend, zu gegenphasigen Biegeschwingungen in einer gemeinsamen Schwingungsebene differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungsmeßsignalen weisen die Meßaufnehmer ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird das vorbeschriebene, mittels der zwei Meßrohre sowie der daran gehalterten Erreger- sowie Sensoranordnung gebildete Innenteil des Meßaufnehmers mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz des Innenteils gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer freie Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegenphasige Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegenphasige Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gerader Meßrohre entspricht dabei ein minimaler Abstand zwischen einlaßseitigem und auslaßseitigem - insoweit mit zum Innenteil gehörigen - Kopplerelementen der freien Schwinglänge der Meßrohre. Mittels der Kopplerelementen kann zudem auch eine Schwingungsgüte des Innenteils wie auch die Empfindlichkeit des Meßaufnehmers insgesamt beeinflußt werden, in der Weise, daß für eine minimal geforderte Empfindlichkeit des Meßaufnehmers zumindest eine minimale freie Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 2200 t/h jeweils für Druckverluste von weniger als 1 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 2500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 47 93 191, der US-A 2002/0157479, der US-A 2007/0151368, der US-A 53 70 002, der US-A 57 96 011, der US-B 63 08 580, der US-B 67 11 958, der US-B 71 34 347, der US-B 73 50 421, oder der WO-A 03/027616, bekannten und bereits etablierter Meßaufnehmerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßaufnehmer herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

Ausgehend vom oben genannten Stand der Technik besteht daher eine Aufgabe der Erfindung darin, einen Meßaufnehmer von hoher Empfindlichkeit und Schwingungsgüte anzugeben, der auch bei großen Massendurchflußraten von mehr als 2200 t/h einen geringen Druckverlust von weniger als 1 bar verursacht, und der auch mit großer nomineller Nennweite von über 250 mm eine möglichst kompakter Bauweise aufweist.

Zur Lösung der Aufgabe besteht die Erfindung in einem Meßaufnehmer vom Vibrationstyp gemäß Anspruch 1.

Ein Grundgedanke der Erfindung besteht darin, anstelle der bei konventionellen Meßaufnehmern großer Nennweite verwendeten zwei parallel durchströmten Meßrohre vier parallel durchströmte gerade Meßrohre zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 2200 t/h, gewährleisten zu können. Darüber hinaus kann der sich aus dem Gesamtquerschnitt der vier Meßrohre ergebende effektive Strömungsquerschnitt des Innenteils im Vergleich zu herkömmlichen nur zwei Meßrohre aufweisenden Meßaufnehmern gleicher nomineller Nennweite und gleicher Leermasse ohne weiteres um mehr als 20% erhöht werden.

Ein Vorteil des erfindungsgemäßen Meßaufnehmers besteht ferner darin, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Insofern ist ein weiterer Vorteil der Erfindung darin zu sehen, daß dadurch nicht nur eine Möglichkeit geschaffen wird, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen, sondern zudem auch ökonomisch sinnvoll realisiert werden können.

Der erfindungsgemäße Meßaufnehmer ist daher besonders zum Messen von strömungsfähigen Medien geeignet, die in einer Rohrleitung mit einem Kaliber von größer 150 mm, insb. von 300 mm oder darüber, geführt sind. Zu dem ist der Meßaufnehmer auch zum Messen auch solcher Massendurchflüsse geeignet, die zumindest zeitweise größer als 2200 t/h sind, insb. zumindest zeitweise mehr als 2400 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
Fign. 1, 2 ein, beispielsweise als Coriolis-Durchfluss/Dichte/Viskositäts-Aufnehmer dienendes In-Line-Meßgerät in perspektivischen, teilweise auch geschnittenen, Seitenansichten;
Fign. 3a, b eine Projektion des In-line-Meßgerät gemäß Fig. 1 in zwei verschiedenen Seitenansichten;
Fig. 4 in perspektivischer Seitenansicht einen Meßaufnehmer vom Vibrationstyp, eingebaut in ein In-line-Meßgerät gemäß
   Fig. 1;

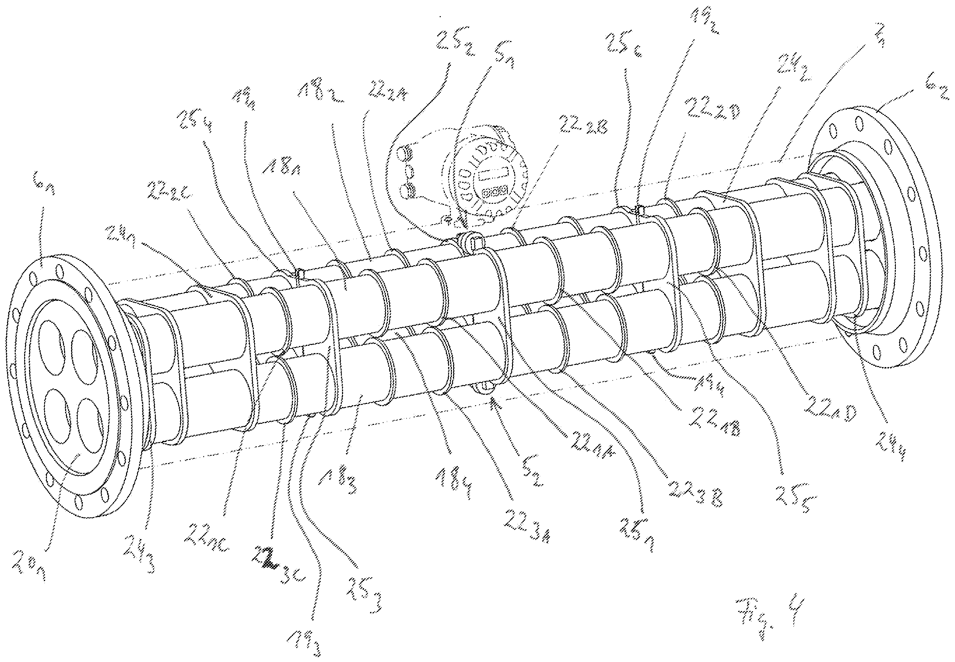

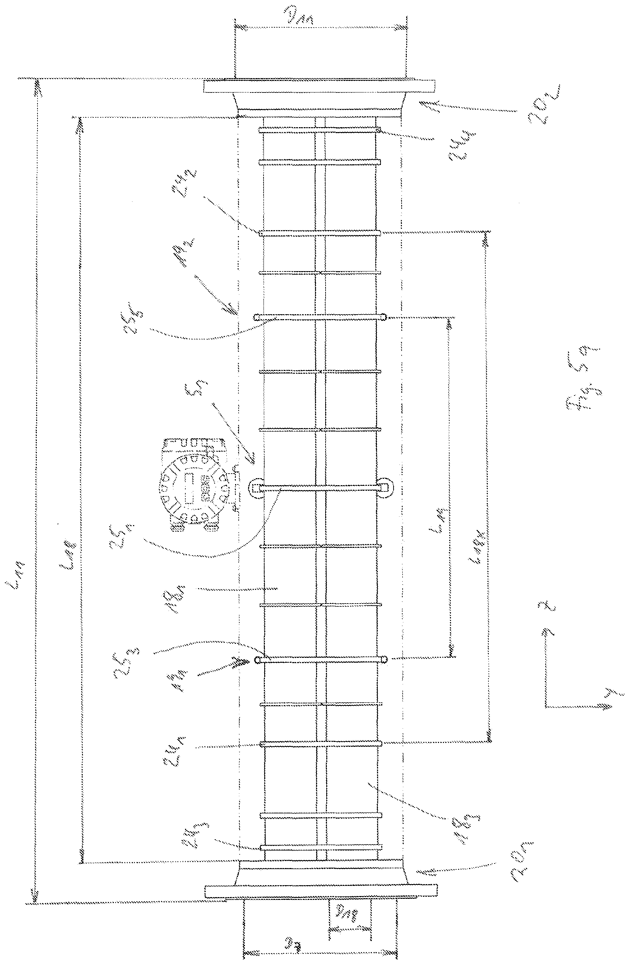

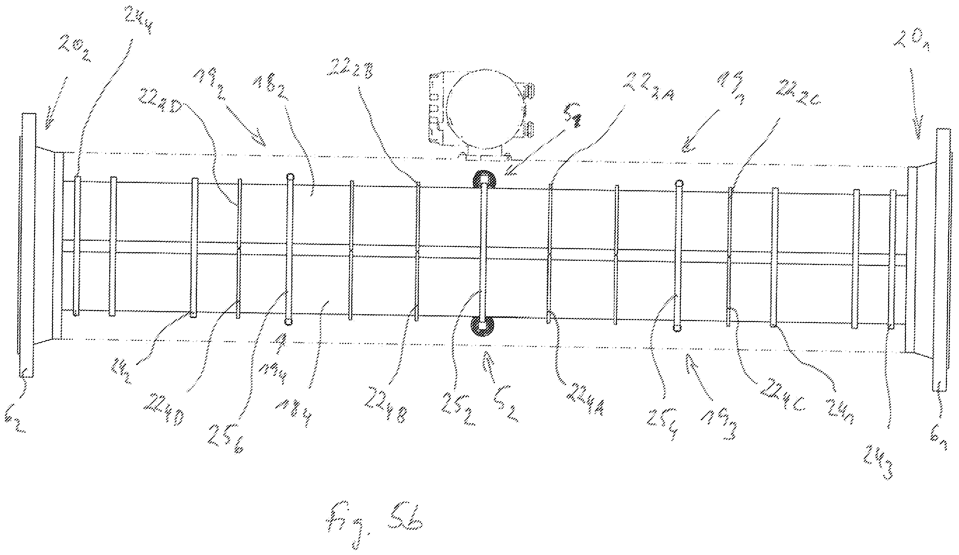

Fign. 5a, b eine Projektion des Meßaufnehmers gemäß Fig. 4 in zwei verschiedenen Seitenansichten; und

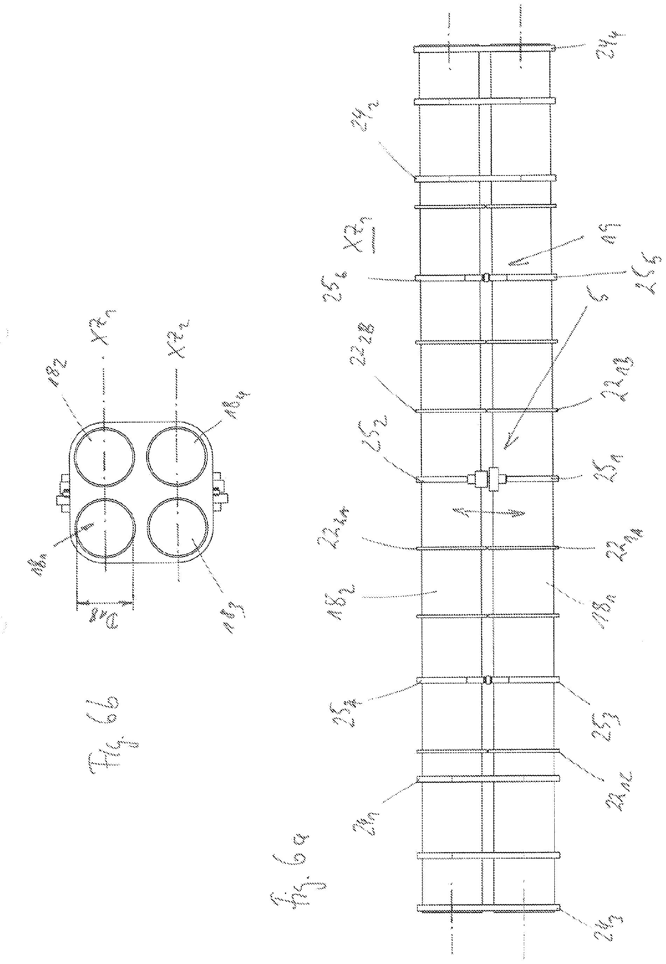

Fign. 6a, b Projektionen eines Innenteils des Meßaufnehmers gemäß Fig. 4 in zwei verschiedenen Seitenansichten.

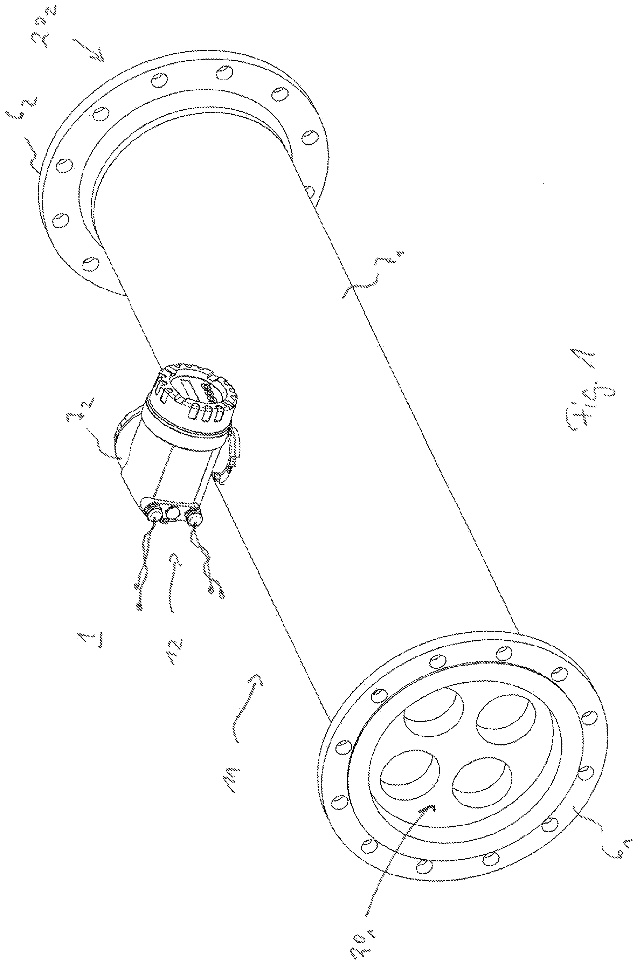

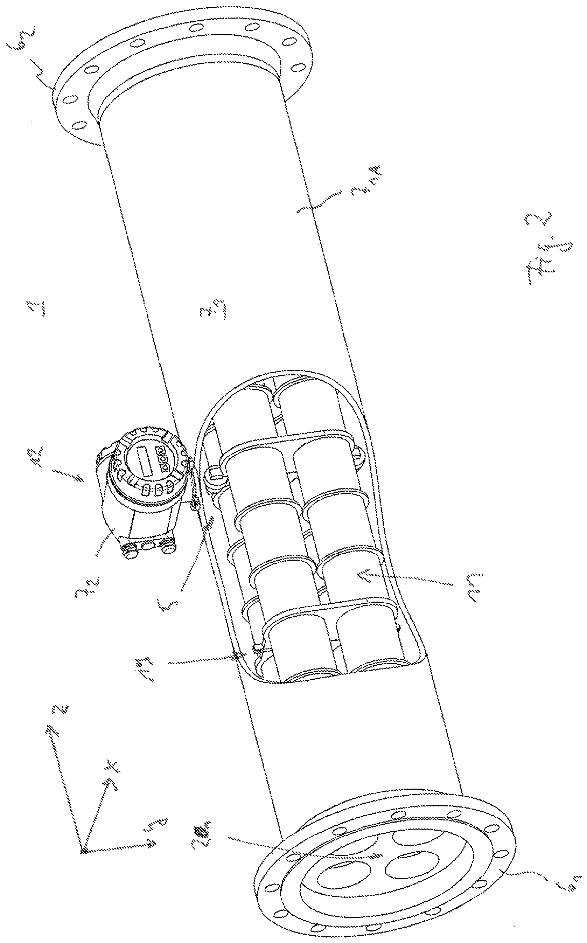

In den Fig. 1, 2 ist ein, insb. als Coriolis-Massedurchfluß- und/oder Dichte-Meßgerät ausgebildetes, In-Line-Meßgerät 1 schematisch dargestellt, das dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das In-Line-Meßgerät 1 ggf. auch dazu verwendet werden eine Dichte ρ und/oder eine Viskosität η des Mediums zu messen. Im besonderen ist das In-Line-Meßgerät dafür vorgesehen, solche Medien, wie z.B. Erdöl, Erdgas oder andere petrochemische Stoffe, zu messen, die in einer Rohrleitung mit einem Kaliber von größer als 250 mm, insb. einem Kaliber von 300 mm oder darüber, strömen. Im besonderen ist das In-Line-Meßgerät ferner dafür vorgesehen strömende Medien der vorgenannten Art zu messen, die mit einer Massendurchflußrate von größer als 2200 t/h, insb. von größer 2500 t/h, strömen gelassen sind.

Das In-Line-Meßgerät 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen, sondern lediglich als schematisch als Schaltungsblock dargestellte - Meßgerät-Elektronik 12. In vorteilhafter Weise ist die Meßgerät-Elektronik 12 so ausgelegt, daß sie im Betrieb des In-Line-Meßgerät 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren ist die Meßgerät-Elektronik 12 so ausgelegt, daß sie von einer externen Energieversorgung, beispielsweise auch über das vorgenannte Feldbussystem, gespeist werden kann. Für den Fall, daß das In-line-Meßgerät 1 für eine Ankopplung an ein Feldbus- oder ein anderes Kommunikationssystem vorgesehen ist, weist die, insb. programmierbare, Meßgerät-Elektronik 12 zu dem eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf.

In den Fig. 4, 5a, 5b, 6a, 6b ist in unterschiedlichen Darstellungen ein Ausführungsbeispiel für einen für das In-Line-Meßgerät 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer von einem zu messenden, beispielsweise pulvrigen, flüssigen, gasförmigen oder dampfförmigen, Medium durchströmten - aus Gründen der Übersichtlichkeit hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Meßgerät-Elektronik entsprechend implementierten Auswerte-Verfahren in der dem Fachmann bekannten Weise z.B. der Massendurchfluß, die Dichte und/oder die Viskosität des Mediums gemessen werden.

Der Meßaufnehmer 11 weist ein u.a. auch als Traggestell dienendes - hier im wesentlichen rohrförmiges, außen kreiszylindrisches - Aufnehmer-Gehäuse 7₁, in dem weitere, dem Erfassen der wenigstens einen Meßgröße dienende Komponenten des Meßaufnehmers 11 vor äußeren Umwelteinflüssen geschützt untergebracht sind. Im hier gezeigten Ausführungsbeispiel ist zumindest ein Mittelsegment des Aufnehmer-Gehäuses 7₁ mittels eines geraden, insb. kreiszylindrischen, Rohres gebildet, so daß zur Fertigung des Aufnehmer-Gehäuses beispielsweise auch kostengünstige, geschweißte oder gegossenen Standardrohre, beispielsweise aus Stahlguß oder geschmiedetem Stahl, verwendet werden können.

Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau vier jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1C}, 20_{1D} bzw. 20_{2A}, 20_{2B}, 20_{2C}, 20_{2D} auf.

Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht.

Infolge der für den Meßaufnehmer letztlich angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4 ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem auch bei angestrebt hohen Massendurchflußraten von über 2200 t/h sind nach einer anderen Ausgestaltung der Erfindung die Einbaulänge und die nominelle Nennweite des Meßaufnehmers aufeinander abgestimmt so bemessen, daß ein Nennweite-zu Einbaulänge-Verhältnis D₁₁/L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist.

In einer weiteren Ausgestaltung des Meßaufnehmers umfaßt das Aufnehmer-Gehäuse ein im wesentlichen rohrförmiges Mittelsegment. Ferner ist vorgesehen, das Aufnehmer-Gehäuse so zu dimensionieren, daß ein durch durch ein Verhältnis des größten Gehäuse-Innendurchmessers zur nominellen Nennweite des Meßaufnehmers definiertes Gehäuse-Innendurchmesser-zu-Nennweite-Verhältnis des Meßaufnehmers, zwar größer als 0.9, jedoch kleiner als 1.5, möglichst aber kleiner als 1.2 ist.

Bei dem hier gezeigten Ausführungsbeispiel schließen sich ein- bzw. auslaßseitig an das Mittelsegment ferner ebenfalls rohrförmige Endsegmente des Aufnehmergehäuses an. Für den im Ausführungsbeispiel gezeigten Fall, daß das Mittelsegment und die beiden Endsegmente wie auch die mit dem jeweiligen Flansch verbundenen Strömungsteiler im Vor- bzw. Auslaufbereich jeweils den gleichen Innendurchmesser aufweisen, kann das Aufnehmer-Gehäuse in vorteilhafter Weise auch mittels eines einstückigen, beispielsweise gegossenen oder geschmiedeten, Rohres gebildet werden, an dessen Enden die Flansche angeformt oder angeschweißt sind, und bei dem die Strömungsteiler mittels, insb. von den Flanschen etwas beabstandet, an die Innenwand orbital und/oder mittels Laser angeschweißten, die Strömungsöffnungen aufweisenden Platten gebildet sind. Insbesondere für den Fall, daß das erwähnte Gehäuse-Innenendurchmesser-zu-Nennweite-Verhältnis des Meßaufnehmers gleich eins gewählt ist, kann für Fertigung des Aufnehmer-Gehäuses beispielsweise ein der anzuschließenden Rohrleitung hinsichtlich Kaliber, Wandstärke und Material entsprechendes und insoweit auch hinsichtlich des erlaubten Betriebsdrucks entsprechend angepaßtes Rohr mit zur gewählten Meßrohrlänge entsprechend passender Länge verwendet werden. Zur Vereinfachung des Transports des Meßaufnehmers bzw. des gesamten damit gebildeten In-line-Meßgeräts können ferner, wie beispielsweise auch in der eingangs erwähnten US-B 07350421 vorgeschlagen, einlaßseitig und auslaßseitig am außen am Aufnehmer-Gehäuse fixierte eine Transport-Öse vorgesehen sein.

Zum Führen des zumindest zeitweise durch Rohrleitung und Meßaufnehmer strömenden Mediums umfaßt der erfindungsgemäße Meßaufnehmer ferner genau vier im Aufnehmer-Gehäuse 10 schwingfähig gehalterte gerade, insb. zueinander parallele und/oder gleichlange, Meßrohre 18₁, 18₂, 18₃, 18₄, die im Betrieb jeweils mit der Rohrleitung kommunizieren und zumindest zeitweise in wenigstens einem für Ermittlung der physikalischen Meßgröße geeigneten Schwingungsmode, dem sogenannten Nutz-Mode, vibrieren gelassen werden. Im besonderen eignet sich als Nutz-Mode ein jedem der Meßrohre 18₁, 18₂, 18₃ bzw. 18₄ naturgemäß innewohnende Biegeschwingungsgrundmode, der bei minimaler Biegeschwingungs-Resonanzfrequenz , f₁₈₁, f₁₈₂, f₁₈₃ bzw. f₁₈₄, genau einen Schwingungsbauch aufweist.

Von den vier - hier im wesentlichen kreiszylindrischen, gleichlangen und zueinander sowie zum oben erwähnten Mittelrohrsegment des Aufnehmergehäuses parallelen - Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ und ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂. Die vier Meßrohre 18₁, 18₂, 18₃, 18₄ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre 18₁, 18₂, 18₃, 18₄ lediglich mittels nämlicher Strömungsteiler 20₁, 20₂ im Aufnehmer-Gehäuse 7₁ schwingfähig gehaltert sind.

Die Meßrohre 18₁, 18₂, 18₃, 18₄ bzw. ein damit gebildete Innenteil des Meßaufnehmers 11 sind, wie aus der Zusammenschau der Fign. 1, 2 und 4 ohne weiteres ersichtlich und wie bei derartigen Meßaufnehmern auch üblich, vom Aufnehmer-Gehäuse 7₁ dabei praktisch vollständig umhüllt. Das Aufnehmer-Gehäuse 7₁ dient insoweit also nicht nur als Tragegestell oder Halterung der Meßrohre 18₁, 18₂, 18₃, 18₄ sondern darüber hinaus auch dazu, diese, wie auch weitere innerhalb des Aufnehmer-Gehäuse 7₁ plazierte Komponenten des Meßaufnehmers, vor äußeren Umwelteinflüssen, wie z.B. Staub oder Spritzwasser, zu schützen. Überdies kann das Aufnehmer-Gehäuse 7₁ ferner auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Meßgerät-Elektronik im Betrieb intern erzeugten Betriebsparametern erfaßt und signalisiert werden können. Als Material für das Aufnehmer-Gehäuse 7₁ können demnach im besondern Stähle, wie etwa Baustahl bzw. rostfreier Stahl, oder auch andere geeignete bzw. üblicherweise hierfür geeignete hochfeste Werkstoffe verwendet werden.

Nach einer Ausgestaltung der Erfindung sind die vier Meßrohre 18₁, 18₂, 18₃, 18₄ ferner so ausgebildet und so im Meßaufnehmer 11 eingebaut, daß zumindest die minimalen Biegeschwingungs-Resonanzfrequenzen f₁₈₁, f₁₈₂ des ersten und zweiten Meßrohrs 18₁, 18₂ im wesentlichen gleich sind und zumindest die minimalen Biegeschwingungs-Resonanzfrequenzen f₁₈₃, f₁₈₄ des dritten und vierten Meßrohrs 18₃, 18₄ im wesentlichen gleich sind.

Nach einer weiteren Ausgestaltung der Erfindung sind zumindest das erste und das zweite Meßrohr 18₁, 18₂ hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich ausgeführt. Ferner sind auch zumindest das dritte und das vierte Meßrohr 18₃, 18₄ hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich, so daß im Ergebnis die vier Meßrohre 18₁, 18₂, 18₃, 18₄ zumindest paarweise im wesentlichen baugleich ausgebildet sind. Nach einer weiteren Ausgestaltung der Erfindung ist hierbei ferner vorgesehen, sowohl das dritte Meßrohr als auch das vierte Meßrohr so auszubilden, daß beide Meßrohre hinsichtlich ihrer jeweiligen geometrischen Rohr-Abmessungen, insb. einer Rohrlänge, einer Rohrwandstärke, eines Rohr-Außendurchmessers und/oder eines Kalibers, verschieden sind vom ersten Meßrohr und vom zweiten Meßrohr, insb. derart, daß die minimalen Biegeschwingungs-Resonanzfrequenzen der vier Meßrohre lediglich paarweise gleich sind. Durch die somit geschaffene Symmetriebrechung bei den vier Meßrohren 18₁, 18₂, 18₃, 18₄ können u.a. die Empfindlichkeit, das Schwingungsverhalten, insb. die mechanischen Eigenfrequenzen, und/oder die Querempfindlichkeit auf die primäre Messung beeinflussende Störgrößen, wie etwa eine Temperatur- oder Druckverteilung, die Beladung des Medium mit Fremdstoffen etc., der beiden insoweit voneinander verschiedenen zwei Meßrohrpaare 18₁, 18₂ bzw. 18₃, 18₄ gezielt aufeinander abgestimmt und somit eine verbesserte Diagnose des Meßaufnehmers im Betrieb ermöglicht werden. Selbstverständlich können die die vier Meßrohre 18₁, 18₂, 18₃, 18₄, falls erforderlich, hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, aber auch baugleich realisiert sein, insb. derart, daß im Ergebnis die minimalen Biegeschwingungs-Resonanzfrequenzen aller vier Meßrohre 18₁, 18₂, 18₃, 18₄ im wesentlichen gleich sind.

Als Material für die Rohrwände der Meßrohre wiederum eignet sich im besonderen Titan, Zirkonium oder Tantal. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Für die meisten Anwendungen der industriellen Meßtechnik, insb. auch in der petrochemischen Industrie, würden daher auch Meßrohre aus rostfreiem Stahl, beispielsweise auch Duplexstahl oder Superduplexstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den in einer gemeinsamen gedachten, senkrecht zu einer, insb. zu einer Hauptströmungsachse des Meßaufnehmers parallelen, Längsachse des Meßaufnehmers verlaufenden Schnittebene des ersten Strömungsteilers liegen - hier kreisförmigen - Querschnittsflächen der Strömungsöffnungen des ersten Strömungsteilers gehören, die Eckpunkte eines gedachten Quadrats bilden. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten Quadrats bilden, wobei nämliche Querschnittsflächen wiederum in einer gemeinsamen gedachten, senkrecht zu einer, insb. zu einer Hauptströmungsachse des Meßaufnehmers parallelen, Längsachse des Meßaufnehmers verlaufenden Schnittebene des zweiten Strömungsteilers liegen. Im Ergebnis dessen bildet eine Einhüllende der vier Meßrohre 18₁, 18₂, 18₃, 18₄ praktisch einen geraden quaderähnlichen Körper mit einer eine vierzählige Symmetrie aufweisenden, quadratähnlichen Grundfläche, wodurch der Platzbedarf des mittels der vier Meßrohre 18₁, 18₂, 18₃, 18₄ gebildeten Innenteils in einer der Kompaktheit des Meßaufnehmers 11 insgesamt förderlichen Weise minimiert werden kann.

Nach einer weiteren Ausgestaltung der Erfindung ist jedes der Meßrohre ferner so im Meßaufnehmer angeordnet, daß ein kleinster seitlicher Abstand jedes der vier - hier gleichlangen - Meßrohre von einer Gehäuseseitenwand des Aufnehmer-Gehäuses jeweils größer als Null, insb. aber größer als 3 mm und/oder größer als ein Doppeltes einer jeweiligen Rohrwandstärke, ist bzw. daß ein kleinster seitlicher Abstand zwischen zwei benachbarten Meßrohren jeweils größer als 3 mm und/oder größer als die Summe von deren jeweiligen Rohrwandstärken ist. Dementsprechend ist ferner jede der Strömungsöffnungen so angeordnet, daß ein kleinster seitlicher Abstand jeder der Strömungsöffnungen von einer Gehäuseseitenwand des Aufnehmer-Gehäuses 7₁ jeweils größer als Null, insb. größer als 3 mm und/oder größer als ein Doppeltes einer kleinsten Rohrwandstärke der Meßrohre 18₁, 18₂, 18₃, 18₄, ist bzw. daß ein kleinster seitlicher Abstand zwischen den Strömungsöffnungen größer als 3 mm und/oder größer als ein Doppeltes einer kleinsten Rohrwandstärke der Meßrohre 18₁, 18₂, 18₃, 18₄ ist. Dafür sind gemäß einer weiteren Ausgestaltung der Erfindung die vier Meßohre 18₁, 18₂, 18₃, 18₄ und das Aufnehmergehäuse 7₁ aufeinander abgestimmt so bemessen, daß ein Gehäuse-zu-Meßrohr-Innendurchmesser-Verhältnis des Meßaufnehmers, definiert durch ein Verhältnis des größten Gehäuse-Innendurchmessers zu einem Kaliber zumindest des ersten Meßrohrs größer als 3, insb. größer als 4 und/oder kleiner als 5, ist.

Wie bereits eingangs erwähnt, werden beim Meßaufnehmer 11 die für die Messung erforderlichen Reaktionskräfte im jeweils zu messenden Medium durch das Schwingenlassen der Meßrohre 18₁, 18₂, 18₃, 18₄ im sogenannten Nutzmode bewirkt. Dafür umfaßt der Meßaufnehmer ferner eine mittels wenigstens eines auf die Meßrohre 18₁, 18₂, 18₃, 18₄ einwirkenden elektro-mechanischen, beispielsweise elektro-dynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im sogenannten Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger dient hierbei im besonderen dazu, eine, von einer entsprechenden Meß- und Betriebsschaltung z.B. des oben genannten Coriolis-Massedurchflußmessers eingespeiste, elektrische Erregerleistung P_{exc} in solche, z.B. pulsierenden oder harmonischen, Erregerkräfte F_{exc} umzuwandeln, die möglichst gleichzeitig, gleichmäßig jedoch gegensinnig auf die Meßrohre einwirken. Die Erregerkräfte F_{exc} können in dem Fachmann an und für sich bekannter Weise z.B. mittels einer in der bereits erwähnten Meß- und Betriebselektronik vorgesehenen Strom- und/oder Spannungs-Regelschaltung, hinsichtlich ihrer Amplitude und, z.B. mittels einer ebenfalls in Meß- und Betriebselektronik vorgesehenen Phasen-Regelschleife (PLL), hinsichtlich ihrer Frequenz eingestellt werden, vgl. hierzu beispielsweise auch die US-A 48 01 897 oder die
US-B 63 11 136.

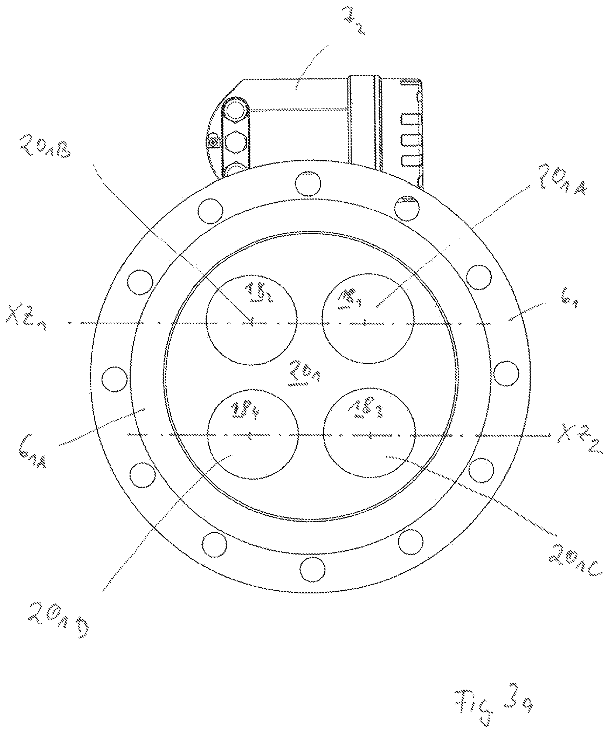

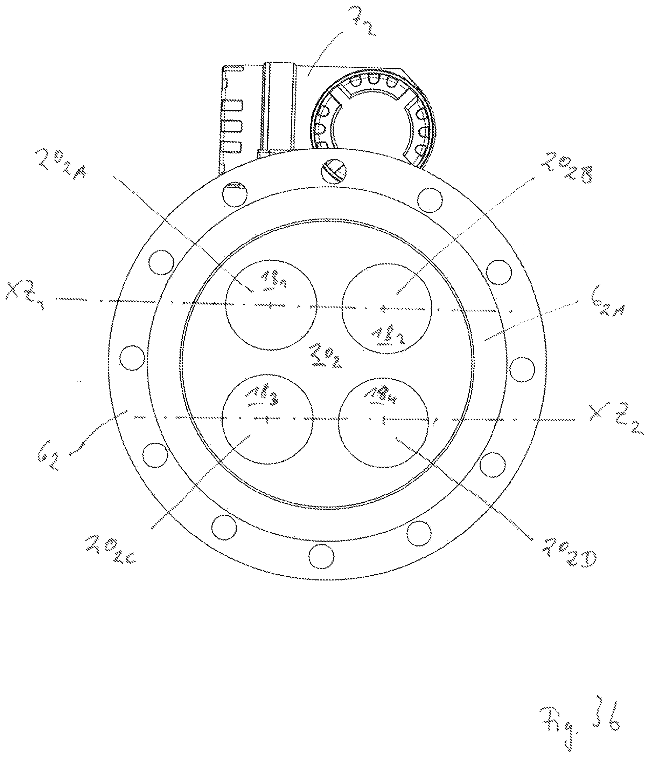

Infolge von durch die zu Schwingungen im Nutzmode angeregten Meßrohre hindurchströmendem Medium werden im Medium Corioliskräfte induziert, die wiederum eine zusätzliche, höheren Schwingungsmoden der Meßrohre, dem sogenannten Coriolismode, entsprechende Verformungen der Meßrohre bewirken. Beispielsweise können die Meßrohre 18₁, 18₂, 18₃, 18₄ im Betrieb von der daran gehalterten elektro-mechanischen Erregeranordnung zu Biegeschwingungen, insb. auf einer momentanen mechanischen Eigenfrequenz des mittels der vier Meßrohre 18₁, 18₂, 18₃, 18₄ gebildeten Innenteils, angeregt werden, bei denen sie - zumindest überwiegend - in einer jeweiligen Schwingungsebene lateral ausgelenkt und, wie aus der Zusammenschau der Fign. 3a, 3b bzw. 6a, 6b ohne weiteres ersichtlich, paarweise in einer gemeinsamen Schwingungsebene XZ₁ bzw. XZ₂ zueinander im wesentlichen gegenphasig schwingen gelassen werden. Dies im besondern derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende gedachte Meßrohr-Längsachse ausgebildet sind, wobei die vier Meßrohr-Längsachsen im hier gezeigten Ausführungsbeispiel mit vier zueinander parallelen Meßrohre 18₁, 18₂, 18₃, 18₄ gleichermaßen zueinander parallel verlaufen, wie die Meßrohre 18₁, 18₂, 18₃, 18₄, und im übrigen auch im wesentlichen parallel zu einer die beiden Strömungsteiler imaginär verbindenden und durch einen Massenschwerpunkt des Meßaufnehmers gedachten Längsachse des gesamten Meßaufnehmers sind. Anders gesagt, können die Meßrohre, wie bei Meßaufnehmern vom Vibrationstyp durchaus üblich, jeweils zumindest abschnittsweise in einem Biegeschwingungsmode nach der Art einer beidseitig eingespannten Saite schwingen gelassen werden. Dementsprechend werden gemäß einer weiteren Ausgestaltung das erste und zweite Meßrohr 18₁, 18₂ jeweils in solche Biegeschwingungen versetzt, die in einer gemeinsamen ersten Schwingungsebene XZ₁ liegen und insoweit im wesentlichen koplanar ausgebildet sind. Ferner ist vorgesehen das dritte und vierte Meßrohr 18₃, 18₄ gleichermaßen in einer gemeinsamen, insb. zur ersten Schwingungsebene XZ₁ im wesentlichen parallelen, zweiten Schwingungsebene XZ₂ zueinander gegenphasig schwingen zu lassen, vgl. hierzu auch Fign. 6a , 6b.

Gemäß einer weiteren Ausgestaltung der Erfindung sind die Meßrohre 18₁, 18₂, 18₃, 18₄ mittels der Erregeranordnung 5 im Betrieb zumindest anteilig, insb. überwiegend, zu Biegeschwingungen angeregt, die eine Biegeschwingungsfrequenz aufweisen, die in etwa gleich einer momentanen mechanischen Resonanzfrequenz des die vier Meßrohre 18₁, 18₂, 18₃, 18₄ umfassenden Innenteils ist oder die zumindest in der Nähe einer solchen Eigen- oder Resonanzfrequenz liegt. Die momentanen mechanischen Biegeschwingungsresonanzfrequenzen sind dabei bekanntlich in besonderem Maße von Größe, Form und Material der Meßrohre 18₁, 18₂, 18₃, 18₄ wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf Biegeschwingungsresonanzfrequenz kann einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung, ferner zumindest zeitweise mit im wesentlichen gleicher Schwingungsfrequenz, insb. auf einer gemeinsamen natürlichen mechanischen Eigenfrequenz des Innenteils, schwingen gelassen. Darüber hinaus ist vorgesehen die im wesentlichen frequenzgleich schwingen gelassenen Meßrohre 18₁, 18₂, 18₃, 18₄ so anzuregen, daß zumindest bei nicht strömendem Medium das erste und dritte Meßrohr 18₁, 18₃ zueinander im wesentlichen synchron schwingen, d.h. mit im wesentlichen gleicher Schwingungsform, im wesentlichen gleicher Phasenlage und etwa gleicher Schwingungsamplitude. In dazu analoger Weise werden bei dieser Ausgestaltung der Erfindung auch das zweite und vierte Meßrohr 18₂, 18₄ zueinander im wesentlichen synchron schwingen gelassen.

Die Erregeranordnung ist gemäß einer Ausgestaltung der Erfindung derart ausgebildet, daß damit das erste Meßrohr 18₁ und das zweite Meßrohr 18₂ im Betrieb zu gegenphasigen Biegeschwingungen in der gemeinsamen ersten Schwingungsebene XZ₁ und das dritte Meßrohr 18₃ und das vierte Meßrohr 18₄ im Betrieb gegenphasige Biegeschwingungen in der gemeinsamen, insb. zur ersten Schwingungsebene XZ₁ im wesentlichen parallelen, zweiten Schwingungsebene XZ₂ anregbar sind. Gemäß einer weiteren Ausgestaltung der Erfindung ist die Erregeranordnung 5 dafür mittels eines, insb. elektrodynamischen und/oder Schwingungen des ersten Meßrohrs 18₁ relativ zum zweiten Meßrohr 18₂ differentiell anregenden, ersten Schwingungserregers 5₁ gebildet.

Ferner ist vorgesehen, daß als erster Schwingungserreger 5₁ ein ein simultan, insb. differentiell, auf wenigstens zwei der Meßrohre 18₁, 18₂, 18₃, 18₄ wirkender Schwingungserreger vom elektrodynamischen Typ dient. Dementsprechend ist der erster Schwingungserreger 5₁ ferner mittels eines am ersten Meßrohr gehalterten Permanentmagneten und einer von dessen Magnetfeld durchfluteten, am zweiten Meßrohr gehalterten Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist. Nach einer Weiterbildung der Erfindung umfaßt die Erregeranordnung ferner einen, insb. elektrodynamischen und/oder zum ersten Schwingungserreger 5₁ baugleichen und/oder Schwingungen des dritten Meßrohrs 18₃ relativ zum vierten Meßrohr 18₄ differentiell anregenden, zweiten Schwingungserreger 5₂. Die beiden Schwingungserreger können in vorteilhafter Weise elektrisch seriell verschaltet sind, insb. derart, daß ein gemeinsames Treibersignal gemeinsame Schwingungen des ersten und dritten Meßrohrs 18₁, 18₃ relativ zum zweiten und vierten Meßrohr 18₂, 18₄ anregt. Gemäß einer weiteren Ausgestaltung ist der der zweite Schwingungserreger 5₂ mittels eines am dritten Meßrohr gehalterten Permanentmagneten und einer von dessen Magnetfeld durchfluteten, am vierten Meßrohr gehalterten Zylinderspule gebildet.

Wie in der Fig. 4 dargestellt, ist der erste Schwingungserreger 5₁ in oberhalb des ersten und zweiten Meßrohrs 18₁, 18₂ und insoweit auch oberhalb eines gemeinsamen örtlichen Schwerpunkts aller vier Meßrohre 18₁, 18₂, 18₃, 18₄ angeordnet, der in einer durch die Einbaustelle nämlichen Schwingungserregers hindurchgehenden gedachten Querschnittsebene des mittels der vier Meßrohre gebildeten Innenteils liegt. Infolge der Anordnungen wenigstens eines Schwingungserregers der Erregeranordnung 5 außerhalb des vorbeschriebenen gemeinsamen Schwerpunkts der vier Meßrohre können zusätzlich zu Biegeschwingungen in vorteilhafter Wiese auch - simultan oder intermittierend - nützliche Torsionsschwingungen angeregt werden. Dadurch können im im jeweiligen Meßrohr 18₁, 18₂, 18₃ bzw. 18₄ momentan befindlichen Medium in erheblichem Maße auch vornehmlich von der Viskosität abhängige Reib- oder Scherkräfte induziert werden, die wiederum dämpfend und insoweit meßbar auf die Schwingungen der Meßrohre 18₁, 18₂, 18₃ bzw. 18₄ zurückwirken. Basierend darauf kann beispielsweise anhand des in die Erregeranordnung 5 eingespeisten Treibersignals, insb. dessen Stromstärke, falls erforderlich, auch eine Viskosität des im Meßaufnehmer geführten Mediums ermittelt werden.

Es sei an dieser Stelle zudem ferner noch angemerkt, daß, obgleich die Schwingungserreger der im Ausführungsbeispiel gezeigten Erregeranordnung jeweils etwa mittig an den Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Wie aus den Fig. 2 und 4 ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre 18₁, 18₂, 18₃ bzw. 18₄ reagierende, beispielsweise elektro-dynamische, Sensoranordnung 19 zum Erzeugen von Vibrationen, insb. Biegeschwingungen, der Meßrohre repräsentierenden Schwingungsmeßsignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Sensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweite Schwingungsmeßsignal liefern. Dies im besonderen in der Weise, daß wenigstens zwei der von der Sensoranordnung 19 gelieferten Schwingungsmeßsignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁, 19₂ können dafürwie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Sensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Meßgerät-Elektronik 12 können desweiteren der erste und dritte Schwingungssensor 19₁, 19₃ elektrisch seriell verschaltet sein, beispielsweise derart, daß ein gemeinsames Schwingungsmeßsignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungsmeßsignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Desweiteren können, wie bei Meßaufnehmern der in Rede stehenden Art durchaus üblich, zusätzlich zu den Schwingungssensoren weitere, insb. Hilfs- bzw. Störgrößen erfassende, Sensoren im Meßaufnehmer vorgesehen sein, wie z.B. Beschleunigungssensoren, Drucksensoren und/oder Temperatursensoren, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können.

Zur Gewährleistung einer möglichst hohen Empfindlichkeit des Meßaufnehmers auf den Massendurchfluß sind nach einer weiteren Ausgestaltung der Erfindung die Meßrohre die Schwingungssensoren so im Meßaufnehmer angeordnet, daß eine einem minimalen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt.

Die Erregeranordnung 5 und die Sensoranordnung 19 sind ferner, wie bei derartigen Meßaufnehmern üblich, in geeigneter Weise mit einer in der Meßgerät-Elektronik entsprechend vorgesehenen der Meß- und Betriebsschaltung gekoppelt, beispielsweise drahtgebunden mittels entsprechender Kabelverbindungen. Die Meß- und Betriebsschaltung wiederum erzeugt einerseits ein die Erregeranordnung 5 entsprechend treibendes, beispielsweise hinsichtlich eines Erregerstromes und/oder einer Erregerspannung geregeltes, Erregersignal. Andererseits empfängt die Meß- und Betriebsschaltung die Schwingungsmeßsignale der Sensoranordnung 19 und generiert daraus gewünschte Meßwerte, die beispielsweise eine Massedurchflußrate, einen totalisierten Massendurchfluß, eine Dichte und/oder eine Viskosität des zu messenden Mediums repräsentieren können und die ggf. vor Ort angezeigt und/oder auch an ein dem In-Line-Meßgerät übergeordnetes Datenverarbeitungssystem inform digitaler Meßdaten gesendet und daselbst entsprechend weiterverarbeitet werden können. Die oben erwähnte Verwendung differentiell wirkender Schwingungserreger bzw. Schwingungssensoren bei dem hier gezeigten Innenteil birgt dabei u.a. auch den Vorteil, daß zum Betreiben des erfindungsgemäßen Meßaufnehmers auch solche etablierten Meß- und Betriebselektroniken verwendet werden können, wie sie beispielsweise bereits in herkömmlichen Coriolis-Massedurchfluß-/ Dichtemeßgeräten breite Anwendung gefunden haben.

Die Meßgerät-Elektronik 12 einschließlich der Meß- und Betriebsschaltung kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Meßgerät-Elektronik 12 angeordnet sein,

Wie bereits mehrfach erwähnt ist das In-Line-Meßgerät und insoweit auch der Meßaufnehmer 11 im besonderen für Messungen auch hoher Massendurchflüsse von mehr als 2200 t/h in einer Rohrleitung von großem Kaliber von mehr als 250 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 100mm beträgt, insb. aber größer als 300mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 60 mm beträgt. Im besonderen sind die Meßrohre 18₁, 18₂, 18₃, 18₄ ferner so ausgebildet, das jedes ein Kaliber D₁₈ von mehr als 80 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einem minimalen Abstand zwischen der ersten Strömungsöffnung 20_{1A} des ersten Strömungsteilers 20₁ und der ersten Strömungsöffnung 20_{2A} des zweiten Strömungsteilers 20₂. Im besonderen sind die Meßrohre 18₁, 18₂, 18₃, 18₄ dabei so ausgelegt, daß deren Meßrohrlänge L₁₈ jeweils größer als 1200 mm ist.

Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 I oder mehr haben kann, kann das dann die vier Meßrohre 18₁, 18₂, 18₃, 18₄ umfassende Innenteil zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse des von den Meßrohren 18₁, 18₂, 18₃, 18₄ gebildeten Innenteils ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M_{11/}M₁₈ einer Leermasse M₁₁ des gesamten Meßaufnehmers zu einer Leermasse M₁₈ des ersten Meßrohrs durchaus größer als 10, insb. größer als 15, sein.

Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten.

Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/L₁₁ des Meßaufnehmers, definiert durch ein Verhältnis der Meßrohrlänge L₁₈ zumindest des ersten Meßrohrs zur Einbaulänge L₁₁ des Meßaufnehmers, mehr als 0.7, insb. mehr als 0.8 und/oder weniger als 0.95, beträgt.

Falls erforderlich, können allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre 18₁, 18₂, 18₃, 18₄ zumindest paarweise ein- und auslaßseitig zumindest paarweise jeweils mittels als sogenannte Knotenplatten dienenden Kopplerelemente - im folgenden Kopplerelemente erster Art - miteinander mechanisch verbunden sind. Darüber hinaus können mittels solcher Kopplerelemente erster Art, sei es durch deren Dimensionierung und/oder deren Positionierung auf den Meßrohren mechanische Eigenfrequenzen der Meßrohre und somit auch mechanische Eigenfrequenzen des mittels der vier Meßrohre sowie daran angebrachten weiteren Komponenten des Meßaufnehmers gebildet Innenteil und insoweit auch dessen Schwingungsverhalten insgesamt gezielt beeinflußt werden.

Die als Knotenplatten dienenden Kopplerelemente erster Art können beispielsweise dünne, insb. aus demselben Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁, 18₂, 18₃ bzw. 18₄ aufgeklemmt und ggf. hernach noch mit dem jeweiligen Meßrohr, beispielsweise durch Hartverlöten oder Schweißen, stoffschlüssig verbunden werden können.

Dementsprechend umfaßt der Meßaufnehmer gemäß einer weiteren Ausgestaltung der Erfindung ein erstes Kopplerelement 24₁ erster Art, das zum Bilden von einlaßseitigen Schwingungsknoten zumindest für Vibrationen, insb. Biegeschwingungen, des ersten Meßrohrs und für dazu gegenphasige Vibrationen, insb. Biegeschwingungen, des zweiten Meßrohrs sowohl vom ersten Strömungsteiler als auch vom zweiten Strömungsteiler beabstandet einlaßseitig zumindest am ersten Meßrohr und am zweiten Meßrohr fixiert ist, sowie ein, insb. zum ersten Kopplerelement baugleiches, zweites Kopplerelement 24₂ erster Art, das zum Bilden von auslaßseitigen Schwingungsknoten zumindest für Vibrationen, insb. Biegeschwingungen, des ersten Meßrohrs 18₁ und für dazu gegenphasige Vibrationen, insb. Biegeschwingungen, des zweiten Meßrohrs 18₁ sowohl vom ersten Strömungsteiler 20₁ als auch vom zweiten Strömungsteiler 20₂ wie auch vom ersten Kopplerelement 24₁ beabstandet auslaßseitig zumindest am ersten Meßrohr 18₁ und am zweiten Meßrohr 18₂ fixiert ist. Wie aus Fig. 4 bzw. 5a, 5b ohne weiteres ersichtlich, sind das erste Kopplerelement 24₁ erster Art zum Bilden von einlaßseitigen Schwingungsknoten auch für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig auch am dritten Meßrohr 18₃ und am vierten Meßrohr 184 und das zweite Kopplerelement 24₂ erster Art zum Bilden von auslaßseitigen Schwingungsknoten zumindest für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ wie auch vom ersten Kopplerelement 24₁ beabstandet auslaßseitig auch am dritten Meßrohr 18₃ und am vierten Meßrohr 184 fixiert, so daß im Ergebnis alle vier Meßrohre 18₁, 18₂, 18₃, 18₄ mittels des ersten Kopplerelements 24₁ erster Art sowie mittels des zweiten Kopplerelements 24₂ erster Art miteinander mechanisch verbunden sind. Jedes der beiden vorgenannten, insb. einander baugleichen, Kopplerelemente 24₁, 24₂ erster Art ist gemäß einer weiteren Ausgestaltung der Erfindung plattenförmig ausgebildet, insb. in derart, daß es, wie auch aus der Zusammenschau der Figuren ohne weiteres ersichtlich, eine eher rechteckförmige oder auch quadratische, Grundfläche oder aber daß es eher eine runde, eine ovale, eine kreuzförmig oder, wie beispielsweise auch in der US-A 2006/0283264 vorgeschlagen, eine eher H-förmige Grundfläche aufweist. Ferner sind die beiden Kopplerelemente 24₁, 24₂ zueinander im wesentlichen parallel verlaufend ausgerichtet sein.

Wie aus den Fig. 4 bzw. 5a, 5b ohne weiteres ersichtlich, sind die beiden vorgenannten Kopplerelemente 24₁, 24₂ ferner so ausgebildet und im Meßaufnehmer so plaziert, daß ein Massenschwerpunkt des ersten Kopplerelements 24₁ erster Art einen Abstand zu einem Massenschwerpunkt des Meßaufnehmers 11 aufweist, der im wesentlichen gleich ist mit einem Abstand eines Massenschwerpunkt des zweiten Kopplerelements 24₂ erster Art zu nämlichen Massenschwerpunkt des Meßaufnehmers 11, insb. so, daß die beiden Kopplerelemente 24₁, 24₂ im Ergebnis symmetrisch zu einer die Meßrohre 18₁, 18₂, 18₃, 18₄ jeweils in Mitte schneidenden gemeinsamen gedachten Querschnittsebene angeordnet sind.

Zur weiteren Erhöhung der Freiheitsgrade bei der Optimierung des Schwingungsverhaltens des mittels der vier Meßrohre 18₁, 18₂, 18₃, 18₄ gebildeten Innenteils umfaßt der Meßaufnehmer 11 nach einer Weiterbildung der Erfindung ferner ein drittes Kopplerelement 24₃ erster Art, das zum Bilden von einlaßseitigen Schwingungsknoten zumindest für Vibrationen, insb. Biegeschwingungen, des dritten Meßrohrs 183 und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig zumindest am dritten 183 Meßrohr und am vierten Meßrohr 18₄ fixiert ist. Darüberhinaus umfaßt der Meßaufnehmer 11 bei dieser Weiterbildung ein, insb. zum dritten Kopplerelement 24₃ erster Art baugleiches, viertes Kopplerelement 24₄ erster Art, das zum Bilden von auslaßseitigen Schwingungsknoten zumindest für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 202 wie auch vom dritten Kopplerelement 24₃ erster Art beabstandet auslaßseitig zumindest am dritten Meßrohr 18₃ und am vierten Meßrohr 18₄ fixiert ist.

Jedes der beiden vorgenannten, insb. einander baugleichen, dritten und vierten Kopplerelemente 24₃, 24₄ erster Art ist gemäß einer weiteren Ausgestaltung der Erfindung wiederum plattenförmig ausgebildet, insb. in derart, daß es eine rechteckförmige, quadratische, runde, kreuzförmig oder H-förmige Grundfläche aufweist. Ferner sind die beiden vorgenannten dritten und vierten Kopplerelemente 24₃, 24₄ zueinander im wesentlichen parallel verlaufend ausgerichtet.

Wie in Fig. 4 bzw. 5a, 5b dargestellt sind das dritte Kopplerelement 24₃ erster Art sowohl vom ersten Strömungsteiler 20₁ als auch vom zweiten Strömungsteiler 20₂ wie auch vom ersten Kopplerelement erster Art 24₁ beabstandet einlaßseitig auch am ersten Meßrohr 18₁ und am zweiten Meßrohr 18₂ und das vierte Kopplerelement 24₄ erster Art sowohl vom ersten Strömungsteiler als auch vom zweiten Strömungsteiler wie auch vom zweiten Kopplerelement beabstandet auslaßseitig auch am ersten Meßrohr und am zweiten Meßrohr fixiert, so daß im Ergebnis alle vier Meßrohre 18₁, 18₂, 18₃, 18₄ auch mittels des dritten Kopplerelements 24₃ erster Art sowie mittels des vierten Kopplerelements 24₄ erster Art miteinander mechanisch verbunden sind.

Wie aus der Zusammenschau der Fig. 4, 5a, 5b ohne weiteres ersichtlich, sind auch das dritte und vierte Kopplerelemente 24₃, 24₄ ferner so ausgebildet und im Meßaufnehmer so plaziert, daß ein Massenschwerpunkt des dritten Kopplerelements 24₃ erster Art einen Abstand zum Massenschwerpunkt des Meßaufnehmers aufweist, der im wesentlichen gleich ist mit einem Abstand eines Massenschwerpunkt des vierten Kopplerelements 24₄ erster Art zu nämlichen Massenschwerpunkt des Meßaufnehmers, insb. so, daß die beiden Kopplerelemente 24₃, 24₄ im Ergebnis symmetrisch zu einer die vier Meßrohre 18₁, 18₂, 18₃, 18₄ jeweils in Mitte schneidenden gemeinsamen gedachten Querschnittsebene angeordnet sind. Ferner sind gemäß einer weiteren Ausgestaltung der Erfindung die vier Kopplerelement 24₁, 24₂, 24₃, 24₄ erster Art so im Meßaufnehmer angeordnet, daß der Abstand des Massenschwerpunkts des dritten Kopplerelements 24₃ erster Art vom Massenschwerpunkt des Meßaufnehmers größer als der Abstand des Massenschwerpunkts des ersten Kopplerelements 24₁ erster Art von nämlichem Massenschwerpunkt des Meßaufnehmers und größer als der Abstand des Massenschwerpunkt des zweiten Kopplerelements 24₂ erster Art von nämlichem Massenschwerpunkt des Meßaufnehmers ist.

Wie aus der Zusammenschau der Fign. 4, 5a und 5b ohne weiteres ersichtlich, definierte ein minimaler Abstand zwischen dem dem Massenschwerpunkt des Meßaufnehmers 11 am nähesten liegenden einlaßseitig am jeweiligen Meßrohr fixierten Kopplerelement erster Art - hier also dem ersten Kopplerelement 24₁ erster Art - und dem dem Massenschwerpunkt des Meßaufnehmers am nähesten liegenden auslaßseitig an nämlichem Meßrohr fixierten Kopplerelement erster Art - hier also dem zweiten Kopplerelement 24₂ erster Art - jeweils eine freie Schwinglänge, L₁₈ₓ, selbigen Meßrohrs, wobei nach einer weiteren Ausgestaltung der Erfindung die Kopplerelemente erster Art so im Meßaufnehmer plaziert sind, daß im Ergebnis die freie Schwinglänge jedes der Meßrohre 18₁, 18₂, 18₃, 18₄ weniger als 2500 mm, insb. weniger als 2000 mm und/oder mehr als 800 mm, beträgt. Alternativ oder in Ergänzung ist ferner vorgesehen, daß alle vier Meßrohre 18₁, 18₂, 18₃, 18₄ die gleiche freie Schwinglänge L₁₈ₓ aufweisen.

Es kann ferner im Sinne einer noch einfacheren und noch genaueren Einstellung des Schwingungsverhaltens des Meßaufnehmers durchaus von Vorteil sein, wenn der Meßaufnehmer, wie beispielsweise in der US-A 2006/0150750 vorgeschlagen, darüberhinaus noch weitere, dem Bilden von ein- bzw. auslaßseitigen Schwingungsknoten für Vibrationen, insb. Biegeschwingungen, des ersten Meßrohrs und für dazu gegenphasige Vibrationen, insb. Biegeschwingungen, des zweiten Meßrohrs bzw. für Vibrationen, insb. Biegeschwingungen, des dritten Meßrohrs und für dazu gegenphasige Vibrationen, insb. Biegeschwingungen, des vierten Meßrohrs dienende Kopplerelemente der vorgenannten Art aufweist, beispielsweise also insgesamt 6 oder 8 solcher Kopplerelemente erster Art.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre 18₁, 18₂, 18₃, 18₄, abgestimmt auf die erwähnte freie Schwinglänge, so bemessen, daß ein Kaliber-zu- Schwinglänge-Verhältnis D₁₈/L₁₈ₓ des Meßaufnehmers, definiert durch ein Verhältnis des Kalibers D₁₈ des ersten Meßrohrs zur freien Schwinglänge L₁₈ₓ des ersten Meßrohrs, mehr als 0.07, insb. mehr als 0.09 und/oder weniger als 0.15, beträgt. Alternativ oder in Ergänzung hierzu sind nach einer weiteren Ausgestaltung der Erfindung die Meßrohre 18₁, 18₂, 18₃, 18₄, abgestimmt auf die oben erwähnte Einbaulänge L₁₁ des Meßaufnehmer, so bemessen, daß ein Schwinglänge-zu-Einbaulänge-Verhältnis L₁₈ₓ/L₁₁ des Meßaufnehmers, definiert durch ein Verhältnis der freien Schwinglänge L₁₈ₓ des ersten Meßrohrs zur Einbaulänge L₁₁ des Meßaufnehmers, mehr als 0.55, insb. mehr als 0.6 und/oder weniger als 0.9, beträgt.

Nach einer weiteren Ausgestaltung der Erfindung sind die Schwingungssensoren, abgestimmt auf die freie Schwinglänge, so im Meßaufnehmer angeordnet, daß ein Meßlänge-zu-Schwinglänge-Verhältnis des Meßaufnehmers, definiert durch ein Verhältnis der erwähnten Meßlänge des Meßaufnehmers zur freien Schwinglänge des ersten Meßrohrs, mehr als 0.6, insb. mehr als 0.65 und/oder weniger als 0.95, beträgt.

Zur Schaffung eines möglichst kompakten, dennoch aber für den Massendurchfluß möglichst empfindlichen Meßaufnehmers sind nach einer weiteren Ausgestaltung der Erfindung die Schwingungssensoren, abgestimmt auf die Einbaulänge des Meßaufnehmers, so im Meßaufnehmer angeordnet, daß ein Meßlänge-zu-Einbaulänge-Verhältnis des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur Meßlänge L₁₉ des Meßaufnehmers definiert ist, mehr als 0.05, insb. mehr als 0.09, beträgt. Gemäß einer weiteren Ausgestaltung der Erfindung ist ferner die oben erwähnte Meßlänge L₁₉ kleiner als 1200 mm gehalten.

Gemäß einer weiteren Ausgestaltung der Erfindung ist ferner vorgesehen, die Meßrohre 18₁, 18₂, 18₃, 18₄ im Betrieb paarweise synchron, also mit gleicher Phasenlage, und insoweit die Schwingungen aller vier Meßrohre 18₁, 18₂, 18₃, 18₄ aufeinander entsprechend abzugleichen, daß die Meßrohre lediglich paarweise außerphasig schwingen gelassen sind. In vorteilhafter Weise sind das Schwingungsverhalten des mittels der vier Meßrohre 18₁, 18₂, 18₃, 18₄ zusammen mit der Erreger- und der Sensoranordnung gebildeten Innenteils wie auch die die Erregeranordnung steuernden Treibersignale so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁, 18₂ zueinander im wesentlichen gegenphasig, also mit einer gegenseitigen Phasenverschiebung von etwa 180°, schwingen und auch das dritte und das vierte Meßrohr 18₃, 18₄ zueinander im wesentlichen gegenphasig schwingen, während gleichzeitig das erste und dritte Meßrohr 18₁, 18₃ zueinander im wesentlichen phasengleich schwingen und das zweite und vierte Meßrohr 18₂, 18₄ zueinander im wesentlichen phasengleich schwingen.

Daher umfaß der Meßaufnehmer gemäß einer weiteren Ausgestaltung der Erfindung ferner ein, insb. plattenförmiges oder stabförmiges, erstes Kopplerelement 25₁ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten Kopplerelement 24₁ erster Art als auch vom zweiten Kopplerelement 24₂ erster Art beabstandet lediglich am ersten Meßrohr 18₁ und am dritten Meßrohr 18₃ fixiert ist. Desweiteren umfaßt der Meßaufnehmer zumindest bei dieser Ausgestaltung der Erfindung wenigstens ein, insb. plattenförmiges oder stabförmiges, zweites Kopplerelement 252 zweiter Art, das zum Synchronisieren von Vibrationen, insb. Biegeschwingungen, des zweiten Meßrohrs 18₂ und von dazu frequenzgleichen Vibrationen, insb. Biegeschwingungen, des vierten Meßrohrs 18₄ sowohl vom ersten Kopplerelement 24₁ erster Art als auch vom zweiten Kopplerelement 24₁ erster Art wie auch vom ersten Kopplerelement 25₁ zweiter Art beabstandet lediglich am zweiten Meßrohr 18₂ und am vierten Meßrohr 18₄ fixiert ist. Wie aus der Zusammenschau der Fig. 4, 5a und 5b ohne weiteres ersichtlich, sind das erste und zweite Kopplerelement 25₁, 25₂ zweiter Art möglichst einander gegenüberliegend im Meßaufnehmer 11 plaziert.

Ein Vorteil der mechanischen Kopplung der Meßrohre in der vorbeschriebenen Weise ist u.a. zu sehen, daß die vier Meßrohre 18₁, 18₂, 18₃, 18₄ zu zwei jeweils effektiv als ein Schwingungssystem wirkenden Meßrohr-Verbunden reduziert werden, die jeder für sich praktisch wie ein einziges Meßrohr wirken, da die von der Erregeranordnung 5 erzeugten Erregerkräfte aufgrund der mechanischen Kopplung sowohl zwischen dem ersten und dem zweiten Meßrohr 18₁, 18₂ als auch gleichermaßen zwischen dem dritten und vierten Meßrohr 18₃, 18₄ wirken bzw. auch die zum Zwecke der Messung im hindurchströmenden Medien verursachten Reaktionskräfte jeweils gemeinsam auf die Schwingungssensoren der Sensoranordnung 5 zurück übertragen werden. Des weiteren können allfällige Unterschiede zwischen den einzelnen Meßrohren 18₁, 18₂, 18₃, 18₄ hinsichtlich deren nominellen Schwingungsverhaltens, z.B. infolge ungleichmäßiger Strömung, unterschiedlicher Temperatur- und/oder unterschiedlicher Dichteverteilung etc., auf sehr einfache Weise ausgeglichen werden. Die Verwendung von Kopplerelementen zweiter Art hat ferner auch den Vorteil, daß jeder die somit auf sehr einfache Weise gebildeten zwei Meßrohr-Verbunde nicht nur für die Erregersondern gleichermaßen auch für die Sensoranordnung 19 und insoweit auch für die Meß- und Betriebsschaltung der Meßgerät-Elektronik 12 insgesamt praktisch jeweils als ein einziges Meßrohr wirkt und der Meßaufnehmer 11 insoweit aus Sicht der Meß- und Betriebsschaltung scheinbar lediglich zwei gegeneinander schwingen gelassenen Meßrohre aufweist. Infolge dessen kann zumindest für die Vorverarbeitung und allfällige Digitalisierungen der Schwingungsmeßsignale bewährte Signalverarbeitungstechnologien und auch bewährte, insb. zweikanalige, also von lediglich zwei Schwingungssensoren gelieferte Schwingungsmeßsignale verarbeitende, Meßschaltungen aus dem Bereich der Coriolis-Massendurchfluß- bzw. der Dichtemessung zurückgegriffen werden. Gleichermaßen kann somit auch für die die Erregeranordnung treibende Betriebsschaltung ohne weiteres dem Fachmann bekannte, insb. auf einkanalige, also genau ein Treibersignal für die Erregeranordnung liefernde, Treibererschaltungen verwendet werden. Falls erforderlich, können aber auch die von den zwei oder mehr Schwingungssensoren jeweils gelieferten Schwingungsmeßsignale aber auch einzeln in jeweils separaten Meßkanälen vorverarbeitet und entsprechend digitalisiert werden; gleichermaßen können, falls erforderlich, auch die ggf. vorhandenen zwei oder mehr Schwingungserreger mittels separaten Treibersignalen separat angesteuert werden.

Nach einer Ausgestaltung der Erfindung sind die Meßrohre 18₁, 18₂, 18₃, 18₄ sowie die diese miteinander verbindenden Kopplerelementen daher ferner so geformt und miteinander mittels Kopplerelementen zweiter Art, ggf. zusätzlich auch mittels Kopplerelementen erster Art, so mechanisch gekoppelt, daß ein durch das erste und das dritte Meßrohr 18₁, 18₃ gebildeter erster Meßrohr-Verbund und ein durch das zweite und das vierte Meßrohr 18₂, 18₄ gebildeter zweiter Meßrohr-Verbund im wesentlichen die gleichen mechanischen Eigenfrequenzen aufweisen.

Im hier gezeigten Ausführungsbeispiel ist das erste Kopplerelement 25₁ zweiter Art im Bereich von 50% eines minimaler Abstand zwischen dem ersten Kopplerelement 24₁ erster Art und dem zweiten Kopplerelement 24₂ erster Art am ersten bzw. dritten Meßrohr 18₁, 18₃ fixiert - insoweit also bei etwa der halben freien Schwinglänge des ersten bzw. dritten Meßrohrs 18₁, 18₃.

Ferner ist auch das zweite Kopplerelement zweiter Art in entsprechender Weise im Bereich von 50% eines minimaler Abstand zwischen dem ersten Kopplerelement 24₁ erster Art und dem zweiten Kopplerelement 24₂ erster Art am zweiten bzw. vierten Meßrohr 18₂, 18₄ fixiert, also etwa bei der halben freien Schwinglänge des zweiten bzw. vierten Meßrohrs 18₂, 18₄.

In vorteilhafter Weise können die Kopplerelemente zweiter Art zusätzlich auch als Halterung von Komponenten der Erregeranordnung 5 dienen. Daher ist nach einer weiteren Ausgestaltung der Erfindung vorgesehen, daß jeder der, insb. baugleichen, Schwingungserreger 5₁, 5₂ anteilig jeweils an zwei einander gegenüberliegenden Kopplerelementen zweiter Art - - hier dem ersten und zweiten Kopplerelement 25₁, 25₂ - gehaltert ist. Somit kann auf sehr effektive, gleichwohl sehr einfache Weise sichergestellt werden, daß die mittels des Schwingungserregers 5₁ generierte Erregerkraft zumindest überwiegend synchrone, insb. auch einander im wesentlichen phasengleiche, Biegeschwingungen des ersten und dritten Meßrohr 18₁, 18₃ bzw. des zweiten und vierten Meßrohrs 18₂, 18₄ bewirkt. Beispielsweise kann im Falle elektro-dynamischer Schwingungserreger die jeweilige Zylinderspule am ersten und der jeweils zugehörige Permanentmagnet am gegenüberliegenden zweiten Kopplerelement zweiter Art fixiert sein. Für den erwähnten Fall, daß die Erregeranordnung 5 zwei Schwingungserreger 5₁, 5₂ aufweist können sowohl der erste Schwingungserreger 5₁ als auch der zweite Schwingungserreger 5₂ jeweils am ersten und zweiten Kopplerelement 25₁, 25₂ zweiter Art gehaltert sein, beispielsweise auch in der Weise, daß, wie aus den Fig. 4 bzw. 5a ohne weiteres ersichtlich, ein minimaler Abstand zwischen dem ersten und zweiten Schwingungserreger 5₁, 5₂ mehr als doppelt so groß ist, wie ein Rohr-Außendurchmessers der Meßrohre 18₁, 18₂, 18₃, 18₄, zumindest aber des ersten Meßrohrs 18₁. Dadurch ist insgesamt ein optimale Ausnutzung des im Innenraum des Aufnehmer-Gehäuses 7₁ angeboten Platzes wie auch eine einfache Montage der Schwingungserreger 5₁, 5₂ ermöglicht.

Nach einer weiteren Ausgestaltung der Erfindung umfaßt der Meßaufnehmer ferner ein, beispielsweise wiederum plattenförmiges oder stabförmiges, drittes Kopplerelement 25₃ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten Kopplerelement 24₁ erster Art als auch vom zweiten Kopplerelement 24₂ erster Art wie auch vom ersten Kopplerelement 25₁ zweiter Art beabstandet lediglich am ersten Meßrohr 18₁ und am dritten Meßrohr 18₃ fixiert ist, sowie ein, insb. plattenförmiges oder stabförmiges, viertes Kopplerelement 25₄ zweiter Art, das zum Synchronisieren von Vibrationen, insb. Biegeschwingungen, des zweiten Meßrohrs 18₂ und von dazu frequenzgleichen Vibrationen, insb. Biegeschwingungen, des vierten Meßrohrs 18₄ sowohl vom ersten und zweiten Kopplerelement erster Art als auch vom zweiten und dritten Kopplerelement zweiter Art jeweils beabstandet lediglich am zweiten Meßrohr 18₂ und am vierten Meßrohr 18₄ fixiert ist. Das dritte und vierte Kopplerelement 25₃, 25₄ zweiter Art sind, wie aus der Zusammenschau der Fig. 4, 5a und 5b ohne weiteres ersichtlich, vorzugsweise einander gegenüberliegend im Meßaufnehmer 11 plaziert.

Ferner umfaßt der Meßaufnehmer 11 gemäß einer weiteren Ausgestaltung der Erfindung ein, insb. plattenförmiges oder stabförmiges, fünftes Kopplerelement 25₅ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten und zweiten Kopplerelement erster Art als auch vom ersten und dritten Kopplerelement zweiter Art beabstandet lediglich am ersten Meßrohr 18₁ und am dritten Meßrohr 18₂ fixiert ist, sowie ein, insb. plattenförmiges oder stabförmiges, sechstes Kopplerelement 25₆ zweiter Art, das zum Synchronisieren von Vibrationen, insb. Biegeschwingungen, des zweiten Meßrohrs und von dazu frequenzgleichen Vibrationen, insb. Biegeschwingungen, des vierten Meßrohrs sowohl vom ersten und zweiten Kopplerelement erster Art als auch vom zweiten, vierten und fünften Kopplerelement zweiter Art jeweils beabstandet lediglich am zweiten Meßrohr 18₂ und am vierten Meßrohr 18₄ fixiert ist. Das fünfte und sechste Kopplerelement 25₅, 25₆ zweiter Art sind in vorzugsweise wiederum einander gegenüberliegend im Meßaufnehmer 11 plaziert.

Desweiteren kann es von Vorteil sein, vorgenannte Kopplerelemente zweiter Art ferner auch zum Haltern einzelner Komponenten der Sensoranordnung verwenden. Demnach ist nach einer weiteren Ausgestaltung der Erfindung vorgesehen, daß der einlaßseitige erste Schwingungssensor 19₁ anteilig jeweils am dritten und vierten Kopplerelement 25₃, 25₄ zweiter Art gehaltert ist. Ferner ist der zweite Schwingungssensor 19₂ in entsprechender Weise am fünften und sechsten Kopplerelement 25₅, 25₆ zweiter Art gehaltert. Somit kann auf sehr effektive, gleichwohl sehr einfache Weise sichergestellt werden, daß das mittels des ersten Schwingungssensors 19₁ im Betrieb generierte Schwingungsmeßsignal zumindest überwiegend synchrone, insb. auch einander phasengleiche, einlaßseitige Biegeschwingungen des ersten und dritten Meßrohrs 18₁, 18₃ relativ zu den gleichermaßen synchronisierten, insb. auch einander phasengleichen, einlaßseitigen Biegeschwingungen des zweiten und vierten Meßrohrs 18₂, 18₄ repräsentiert, bzw. daß das mittels des zweiten Schwingungssensors 19₂ im Betrieb generierte Schwingungsmeßsignal zumindest überwiegend synchrone, insb. auch einander phasengleiche, auslaßseitige Biegeschwingungen des ersten und dritten Meßrohrs 18₁, 18₃ relativ zu den gleichermaßen synchronisierten, insb. auch einander phasengleichen, auslaßseitigen Biegeschwingungen des zweiten und vierten Meßrohrs 18₂, 18₄ repräsentiert. Beispielsweise können im Falle elektro-dynamischer Schwingungssensoren die Zylinderspule des ersten Schwingungssensors 19₁ am dritten Kopplerelement zweiter Art und der zugehörige Permanentmagnet am gegenüberliegenden vierten Kopplerelement zweiter Art bzw. die Zylinderspule des zweiten Schwingungssensors 19₂ am fünften und der zugehörige Permanentmagnet am gegenüberliegenden sechsten Kopplerelement zweiter Art fixiert sein. Für den erwähnten Fall, daß die Sensoranordnung 19 mittels vier Schwingungssensoren 19₁, 19₂, 19₃, 19₄ gebildet ist, sind nach einer weiteren Ausgestaltung der Erfindung sowohl der erste Schwingungssensor 19₁ als auch der dritte Schwingungssensor 19₃ jeweils anteilig am dritten und vierten Kopplerelement zweiter Art gehaltert, insb. derart, daß, wie aus der Zusammenschau der Fig. 4, 5a und 5b ohne weiteres ersichtlich, ein minimaler Abstand zwischen dem ersten und dritten Schwingungssensor 19₁, 19₃ mehr als doppelt so groß ist, wie ein Rohr-Außendurchmessers des ersten Meßrohrs 18₁. In entsprechender Weise können zudem auch der zweite Schwingungssensor 19₂ und der vierte Schwingungssensor 19₄ jeweils am fünften und sechsten Kopplerelement zweiter Art gehaltert sein, insb. in der Weise, daß, wie aus der Zusammenschau der Fig. 4, 5a und 5b ohne weiteres ersichtlich, ein minimaler Abstand zwischen dem zweiten und vierten Schwingungssensor 19₂, 19₄ mehr als doppelt so groß ist, wie ein Rohr-Außendurchmessers des ersten Meßrohrs 18₁, wodurch insgesamt ein optimale Ausnutzung des im Innenraum des Aufnehmer-Gehäuses 7₁ angeboten Platzes wie auch eine einfache Montage der Schwingungssensoren der Sensoranordnung 19 ermöglicht ist. Daher ist nach einer weiteren Ausgestaltung der Erfindung jeder der, insb. baugleichen, Schwingungssensoren der Sensoranordnung 19 an zwei einander gegenüberliegenden Kopplerelementen zweiter Art gehaltert.

Zur weiteren Verbesserung der Schwingungsgüte des Innenteils bei möglichst kurzer Einbaulänge L₁₁ des Meßaufnehmers 11 bzw. möglichst kurzer freier Schwinglänge L₁₈ₓ der Meßrohre 18₁, 18₂, 18₃ bzw. 18₄ umfaßt der Meßaufnehmer gemäß der Erfindung eine Vielzahl von ringförmigen, insb. einander baugleichen, Versteifungselementen 22_{1A},...22_{2A},...22_{3A},...22_{4A},... von denen jedes an genau einem der Meßrohre 18₁, 18₂, 18₃, 18₄ so angebracht ist, daß es dieses entlang einer von dessen, insb. zirkulär umlaufenden, gedachten Umfangslinien umgreift, vgl. hierzu auch die eingangs erwähnte
US-B 69 20 798. Im besonderen ist hierbei ferner vorgesehen, daß auf jedem der Meßrohre 18₁, 18₂, 18₃ bzw. 18₄, wenigstens vier, insb. baugleiche, nämlicher Versteifungselemente 22_{1A}, 22_{1B}, 22_{1C}, 22_{1D} bzw. 22_{2A}, 22_{2B}, 22_{2C}, 22_{2D} bzw. 22_{3A}, 22_{3B}, 22_{3C}, 22_{3D} bzw. 22_{4A}, 22_{4B}, 22_{4C}, 22_{4D} angebracht sind. Die Versteifungselementen 22_{1A},...22_{2A},...22_{3A},...22_{4A},... sind in vorteilhafter Weise so im Meßaufnehmer 11 plaziert, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs 18₁, 18₂, 18₃ bzw. 18₄ liegt.

Durch die Verwendung von vier statt wie bisher zwei parallel durchströmten Meßrohren ist es somit auch möglich, Meßaufnehmer der beschriebenen Art auch für große Massendurchflußraten bzw. mit großen nominellen Nennweiten von weit über 250 mm einerseits mit einer Meßgenauigkeit von über 99,8% bei einem akzeptablem Druckabfall, insb. von etwa 1bar oder weniger, kostengünstig herzustellen und andererseits die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse des mittels der vier Meßrohre und der daran gehalterten Erreger- und Sensoranordnung sowie ggf. weiteren an den Meßrohren fixierten und deren Schwingungsverhalten beeinflussenden Komponenten des Meßaufnehmers gebildeten Innenteils definiertes Massenverhältnis des Meßaufnehmers ohne weiteres kleiner als 3, insb. kleiner als 2.5, gehalten werden kann.

## Patentansprüche

1. In-Line-Meßgerät zum Messen einer Massendurchflußrate, insb. auch eines über ein Zeitintervall totalisierten Gesamt-Massendurchflusses, eines in einer Rohrleitung zumindest zeitweise mit einer Massendurchflußrate von mehr als 2200 t/h strömenden Mediums, insb. eines Gases, einer Flüssigkeit, eines Pulvers oder eines anderen strömungsfähigen Stoffes, welches, insb. als Kompaktgerät ausgebildete, In-Line-Meßgerät einen Meßaufnehmer vom Vibrationstyp Erzeugen von dem Erfassen einer Massendurchflußrate des in einer Rohrleitung geführten strömungsfähigen Mediums dienenden Corioliskräften, sowie eine mit dem Meßaufnehmer elektrisch gekoppelte, insb. auch mechanisch starr verbundene, Meßgerät-Elektronik aufweist, wobei der Meßaufnehmer umfaßt:
- ein, insb. im wesentlichen rohrförmiges und/oder außen kreiszylindrisches, Aufnehmer-Gehäuse (7₁), von dem ein einlaßseitiges erstes Gehäuseende mittels eines genau vier jeweils voneinander beabstandeten, insb. kreiszylindrische, kegelförmige oder konusförmige, Strömungsöffnungen (20_{1A}, 20_{1B}, 20_{1C}, 20_{1D}) aufweisenden, als integraler Bestandteil des Aufnehmer-Gehäuses (7₁) ausgebildeten einlaßseitigen ersten Strömungsteiler (20₁) und ein auslaßseitiges zweites Gehäuseende mittels eines genau vier jeweils voneinander beabstandeten, insb. kreiszylindrische, kegelförmige oder konusförmige, Strömungsöffnungen (20_{2A}, 20_{2B}, 20_{2C}, 20_{2D}) aufweisenden, als integraler Bestandteil des Aufnehmer-Gehäuses (7₁) ausgebildeten auslaßseitigen zweiten Strömungsteilers (20₂) gebildet sind;
- genau vier unter Bildung strömungstechnisch parallel geschalteter Strömungspfade an die, insb. baugleichen, Strömungsteiler (20₁, 20₂) angeschlossene, insb. lediglich mittels nämlicher Strömungsteiler (20₁, 20₂) im Aufnehmer-Gehäuse schwingfähig gehalterte und/oder baugleiche und/oder zueinander zumindest paarweise parallelen, gerade Meßrohre (18₁, 18₂, 18₃, 18₄) zum Führen von strömendem Medium, von denen
-- ein, insb. kreiszylindrisches, erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
-- ein, insb. kreiszylindrisches, zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
-- ein, insb. kreiszylindrisches, drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
-- ein, insb. kreiszylindrisches, viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet;
- eine Vielzahl von dem Erhöhen der Schwingungsgüte der Meßrohre (18₁, 18₂, 18₃, 18₄) dienenden ringförmigen, insb. baugleichen, Versteifungselementen (22_{1A}, 22_{1B}, 22_{1C}, 22_{1D}, 22_{2A}, 22_{2B}, 22_{2C}, 22_{2D}, 22_{3A}, 22_{3B}, 22_{3C}, 22_{3D}, 22_{4A}, 22_{4B}, 22_{4C}, 22_{4D}), von denen jedes an genau einem der Meßrohre (181, 182, 18₃, 18₄) so angebracht ist, daß es dieses entlang einer von dessen Umfangslinien umgreift;
- eine elektro-mechanische, insb. mittels elektro-dynamischer Schwingungserreger (5₁, 5₂) gebildete, Erregeranordnung (5) zum Erzeugen und/oder Aufrechterhalten von mechanischen Schwingungen, insb. von Biegeschwingungen, der vier Meßrohre (18₁, 18₂, 18₃, 18₄), wobei die Erregeranordnung derart ausgebildet ist, daß damit das erste Meßrohr (18₁) und das zweite Meßrohr (18₂) im Betrieb zu gegenphasigen Biegeschwingungen in einer gemeinsamen gedachten ersten Schwingungsebene (XZ₁) und das dritte Meßrohr (18₃) und das vierte Meßrohr (18₄) im Betrieb gegenphasige Biegeschwingungen in einer gemeinsamen gedachten, insb. zur ersten Schwingungsebene (XZ₁) im wesentlichen parallelen, zweiten Schwingungsebene (XZ₂) anregbar sind; sowie
- eine auf Vibrationen, insb. mittels der Erregeranordnung angeregten Biegeschwingungen, der Meßrohre (18₁, 18₂, 18₃, 18₄) reagierende, insb. elektro-dynamische und/oder mittels einander baugleicher Schwingungssensoren (19₁, 19₂, 19₃, 19₄) gebildete, Sensoranordnung (19) zum Erzeugen von Vibrationen, insb. Biegeschwingungen, der Meßrohre (18₁, 18₂, 18₃, 18₄) repräsentierenden Schwingungsmeßsignalen,
-- wobei die Sensoranordnung (19) mittels eines Schwingungen des ersten Meßrohrs (181) relativ zum zweiten Meßrohr (18₂) differentiell erfassenden, insb. elektrodynamischen, einlaßseitigen ersten Schwingungssensors (19₁) sowie eines Schwingungen des ersten Meßrohrs (18₁) relativ zum zweiten Meßrohr (18₂) differentiell erfassenden, insb. elektrodynamischen, auslaßseitigen zweiten Schwingungssensors (19₂) gebildet ist
-- und wobei die Sensoranordnung (19) mittels eines Schwingungen des dritten Meßrohrs (18₃) relativ zum vierten Meßrohr (18₄) differentiell erfassenden, insb. elektrodynamischen, einlaßseitigen dritten Schwingungssensors (19₃) sowie eines Schwingungen des dritten Meßrohrs (18₃) relativ zum vierten Meßrohr (18₄) differentiell erfassenden, insb. elektrodynamischen, auslaßseitigen vierten Schwingungssensors (19₄) gebildet ist,
- wobei eine nominellen Nennweite, D₁₁, des Meßaufnehmers, die einem Kaliber der Rohrleitung, in deren Verlauf der Meßaufnehmer einzusetzen ist, entspricht, mehr als 100 mm beträgt, insb. größer als 300 mm ist,
- und wobei jedes der vier, insb. gleichkalibrigen und/oder gleichlangen, Meßrohre (18₁, 18₂, 18₃, 18₄) ein Kaliber, D₁₈, aufweist, das mehr als 60 mm, insb. mehr als 80 mm, beträgt.

2. In-Line-Meßgerät nach einem der vorherigen Ansprüche,
- wobei eine einem minimalen Abstand zwischen dem ersten Schwingungssensor (19₁) und dem zweite Schwingungssensor (19₂) entsprechende Meßlänge, L₁₉, des Meßaufnehmers mehr als 500 mm, insb. mehr als 600 mm und/oder weniger als 1200 mm, beträgt, insb. derart, daß ein Kaliber-zu-Meßlänge-Verhältnis, D₁₈/L₁₉, des Meßaufnehmers, definiert durch ein Verhältnis des Kalibers, D₁₈, des ersten Meßrohrs zur Meßlänge, L₁₉, des Meßaufnehmers mehr als 0.05 beträgt.

3. In-Line-Meßgerät nach Anspruch 2, weiters umfassend
- ein, insb. plattenförmigen, erstes Kopplerelement (24₁) erster Art, das zum Bilden von einlaßseitigen Schwingungsknoten zumindest für Vibrationen, insb. Biegeschwingungen, des ersten Meßrohrs und für dazu gegenphasige Vibrationen, insb. Biegeschwingungen, des zweiten Meßrohrs sowohl vom ersten Strömungsteiler als auch vom zweiten Strömungsteiler beabstandet einlaßseitig zumindest am ersten Meßrohr und am zweiten Meßrohr fixiert ist, sowie
- ein, insb. plattenförmigen und/oder zum ersten Kopplerelement (24₁) baugleiches und/oder zum ersten Kopplerelement (24₁) paralleles, zweites Kopplerelement (24₂) erster Art, das zum Bilden von auslaßseitigen Schwingungsknoten zumindest für Vibrationen, insb. Biegeschwingungen, des ersten Meßrohrs und für dazu gegenphasige Vibrationen, insb. Biegeschwingungen, des zweiten Meßrohrs sowohl vom ersten Strömungsteiler als auch vom zweiten Strömungsteiler wie auch vom ersten Kopplerelement beabstandet auslaßseitig zumindest am ersten Meßrohr und am zweiten Meßrohr fixiert ist,
- wobei eine einem minimaler Abstand zwischen dem ersten Kopplerelement erster Art und dem zweiten Kopplerelement erster Art entsprechende freie Schwinglänge, L₁₈ₓ, des ersten Meßrohrs, insb. jedes der Meßrohre, weniger als 2500 mm, insb. weniger als 2000 mm und/oder mehr als 800 mm, beträgt, insb. derart, daß ein Meßlänge-zu-Schwinglänge-Verhältnis, L₁₉/L₁₈ₓ, des Meßaufnehmers, definiert durch ein Verhältnis der Meßlänge, L₁₉, des Meßaufnehmers zur freien Schwinglänge, L₁₈ₓ, des ersten Meßrohrs, mehr als 0.6 beträgt und/oder, daß ein Kaliber-zu- Schwinglänge-Verhältnis, D₁₈/L₁₈ₓ, des Meßaufnehmers, definiert durch ein Verhältnis des Kalibers, D₁₈, des ersten Meßrohrs (18₁) zur freien Schwinglänge, L₁₈ₓ, des ersten Meßrohrs (18₁), mehr als 0.07, insb. mehr als 0.09 und/oder weniger als 0.15, beträgt.

4. In-Line-Meßgerät nach einem der vorherigen Ansprüche,
- wobei der erste Strömungsteiler (20₁) einen Flansch (6₁) zum Anschließen des Meßaufnehmers an ein dem Zuführen von Medium zum Meßaufnehmer dienendes Rohrsegment der Rohrleitung und der zweite Strömungsteiler (20₂) einen Flansch (6₂) zum Anschließen des Meßaufnehmers an ein dem Abführen von Medium vom Meßaufnehmer dienendes Rohrsegment der Rohrleitung aufweisen, und
- wobei jeder der, insb. jeweils eine Masse von mehr als 50 kg aufweisenden, Flansche (6₁, 62) jeweils eine Dichtfläche (6_{1A}, 6_{2A}) zum fluiddichten Verbinden des Meßaufnehmers mit dem jeweils korrespondierenden Rohrsegment der Rohrleitung aufweist, und wobei ein Abstand zwischen den Dichtflächen (6_{1A}, 6_{2A}) beider Flansche (6₁, 6₂) eine, insb. mehr als 1200 mm betragende und/oder weniger als 3000 mm betragende, Einbaulänge, L₁₁, des Meßaufnehmers definiert.

5. In-Line-Meßgerät nach Anspruch 2 und 4,
- wobei ein Kaliber-zu-Einbaulänge-Verhältnis, D₁₈/L₁₁, des Meßaufnehmers, definiert durch ein Verhältnis des Kalibers, D₁₈, des ersten Meßrohrs zur Einbaulänge, L₁₁, des Meßaufnehmers, mehr als 0.02, insb. mehr als 0.05 und/oder weniger als 0.09, beträgt; und/oder
- wobei ein Meßlänge-zu-Einbaulänge-Verhältnis, L₁₉/L₁₁, des Meßaufnehmers, definiert durch ein Verhältnis der Meßlänge, L₁₉, zur Einbaulänge, L₁₁, des Meßaufnehmers, mehr als 0.3, insb. mehr als 0.4 und/oder weniger als 0.7, beträgt.

6. In-Line-Meßgerät nach Anspruch 3 und 4, wobei ein Schwinglänge-zu-Einbaulänge-Verhältnis, L₁₈ₓ/L₁₁, des Meßaufnehmers, definiert durch ein Verhältnis der freien Schwinglänge, L₁₈ₓ, des ersten Meßrohrs zur Einbaulänge, L₁₁, des Meßaufnehmers, mehr als 0.55, insb. mehr als 0.6 und/oder weniger als 0.9, beträgt.

7. In-Line-Meßgerät nach einem der Ansprüche 4 bis 6,
- wobei eine einem minimalen Abstand zwischen der ersten Strömungsöffnung (20_{1A}) des ersten Strömungsteilers (20₁) und der ersten Strömungsöffnung (20_{2A}) des zweiten Strömungsteilers (20₂) entsprechende Meßrohrlänge, L₁₈, des ersten Meßrohrs (18₁) mehr als 1000 mm, insb. mehr als 1200 mm und/oder weniger als 2000 mm, beträgt, und
- wobei ein Meßrohrlänge-zu-Einbaulänge-Verhältnis, L₁₈/L₁₁, des Meßaufnehmers, definiert durch ein Verhältnis der Meßrohrlänge, L₁₈, des ersten Meßrohrs zur Einbaulänge, L₁₁, des Meßaufnehmers, mehr als 0.7, insb. mehr als 0.8 und/oder weniger als 0.95, beträgt.

8. In-Line-Meßgerät nach einem der Ansprüche 3 bis 7, weiters umfassend
- ein, insb. plattenförmigen, drittes Kopplerelement (24₃) erster Art, das zum Bilden von einlaßseitigen Schwingungsknoten zumindest für Vibrationen, insb. Biegeschwingungen, des dritten Meßrohrs (18₃) und für dazu gegenphasige Vibrationen, insb. Biegeschwingungen, des vierten Meßrohrs (18₄) sowohl vom ersten Strömungsteiler als auch vom zweiten Strömungsteiler beabstandet einlaßseitig zumindest am dritten Meßrohr (18₃) und am vierten Meßrohr (18₄) fixiert ist, sowie
- ein, insb. plattenförmigen, viertes Kopplerelement (24₄) erster Art, das zum Bilden von auslaßseitigen Schwingungsknoten zumindest für Vibrationen, insb. Biegeschwingungen, des dritten Meßrohrs (18₃) und für dazu gegenphasige Vibrationen, insb. Biegeschwingungen, des vierten Meßrohrs (18₄) sowohl vom ersten Strömungsteiler als auch vom zweiten Strömungsteiler wie auch vom dritten Kopplerelement erster Art beabstandet auslaßseitig zumindest am dritten Meßrohr (18₄) und am vierten Meßrohr (18₄) fixiert ist,
- wobei das dritte Kopplerelement erster Art jeweils vom ersten und zweiten Kopplerelement erster Art beabstandet sowohl am ersten Meßrohr als auch am zweiten Meßrohr fixiert ist, und wobei das vierte Kopplerelement erster Art jeweils vom ersten und zweiten Kopplerelement erster Art beabstandet sowohl am ersten Meßrohr als auch am zweiten Meßrohr fixiert ist,
- wobei ein Massenschwerpunkt des ersten Kopplerelements erster Art einen Abstand zu einem Massenschwerpunkt des Meßaufnehmers aufweist, der im wesentlichen gleich ist mit einem Abstand eines Massenschwerpunkt des zweiten Kopplerelements erster Art zu nämlichem Massenschwerpunkt des Meßaufnehmers,
- wobei ein Massenschwerpunkt des dritten Kopplerelements erster Art einen Abstand zum Massenschwerpunkt des Meßaufnehmers aufweist, der im wesentlichen gleich ist mit einem Abstand eines Massenschwerpunkts des vierten Kopplerelements erster Art zu nämlichem Massenschwerpunkt des Meßaufnehmers, und
- wobei ein Abstand des Massenschwerpunkts des dritten Kopplerelements erster Art vom Massenschwerpunkt des Meßaufnehmers größer als ein Abstand des Massenschwerpunkts des ersten Kopplerelements erster Art von nämlichem Massenschwerpunkt des Meßaufnehmers und größer als ein Abstand des Massenschwerpunkt des zweiten Kopplerelements erster Art von nämlichem Massenschwerpunkt des Meßaufnehmers ist.

9. In-Line-Meßgerät nach einem der Ansprüche 3 bis 8,
- welcher Meßaufnehmer weiters umfaßt:
-- ein, insb. plattenförmiges oder stabförmiges, erstes Kopplerelement (25₁) zweiter Art, das zum Synchronisieren von Vibrationen, insb. Biegeschwingungen, des ersten Meßrohrs (18₁) und von dazu frequenzgleichen Vibrationen, insb. Biegeschwingungen, des dritten Meßrohrs (18₃) sowohl vom ersten Kopplerelement (24₁) erster Art als auch vom zweiten Kopplerelement (24₂) erster Art beabstandet lediglich am ersten Meßrohr (18₁) und am dritten Meßrohr (18₃) fixiert ist, sowie
-- ein, insb. plattenförmiges oder stabförmiges, zweites Kopplerelement (25₂) zweiter Art, das zum Synchronisieren von Vibrationen, insb. Biegeschwingungen, des zweiten Meßrohrs (18₂) und von dazu frequenzgleichen Vibrationen, insb. Biegeschwingungen, des vierten Meßrohrs (18₄) sowohl vom ersten Kopplerelement (24₁) erster Art als auch vom zweiten Kopplerelement (24₂) erster Art wie auch vom ersten Kopplerelement (25₁) zweiter Art beabstandet lediglich am zweiten Meßrohr (18₂) und am vierten Meßrohr (18₄) fixiert ist; und/oder
-- wobei auf jedem der Meßrohre (18₁, 18₂, 18₃, 18₄) wenigstens vier ringförmige, insb. baugleiche, Versteifungselemente (22_{1A}, 22_{1B}, 22_{1C}, 22_{1D}; 22_{2A}, 22_{2B}, 22_{2C}, 22_{2B} 22_{3A}, 22_{3B}, 22_{3C}, 22_{3D}; 22_{4A}, 22_{4B}, 22_{4C}, 22_{4D}) angebracht sind, und wobei die Versteifungselementen so im Meßaufnehmer plaziert sind, daß zwei auf demselben Meßrohr angebrachte, benachbarte Versteifungselementen zueinander einen Abstand aufweisen, der mindestens 70% eines Rohr-Außendurchmessers, D₁₈ₐ, nämlichen Meßrohrs (18₁; 18₂; 18₃; 18₄), höchstens aber 150% selbigen Rohr-Außendurchmessers, D₁₈ₐ, beträgt, insb. einen Abstand im Bereich von 80% bis 120% selbigen Rohr-Außendurchmessers.

10. In-Line-Meßgerät nach einem der vorherigen Ansprüche,
- wobei der erste und dritte Schwingungssensor (19₁, 19₃) elektrisch seriell verschaltet sind, derart, daß ein gemeinsames Schwingungsmeßsignal gemeinsame einlaßseitige Schwingungen des ersten und dritten Meßrohrs (18₁, 18₃) relativ zum zweiten und vierten Meßrohr (18₂, 18₄) repräsentiert; und/oder
- wobei der erste Schwingungssensor (19₁) mittels eines am ersten Meßrohr (18₁) gehalterten Permanentmagneten und einer von dessen Magnetfeld durchfluteten, am zweiten Meßrohr (18₂) gehalterten Zylinderspule gebildet ist, und wobei der zweite Schwingungssensor (19₂) mittels eines am ersten Meßrohr (18₁) gehalterten Permanentmagneten und einer von dessen Magnetfeld durchfluteten, am zweiten Meßrohr (18₂) gehalterten Zylinderspule gebildet ist; und/oder
- wobei der dritte Schwingungssensor (19₃) mittels eines am dritten Meßrohr (18₁) gehalterten Permanentmagneten und einer von dessen Magnetfeld durchfluteten, am vierten Meßrohr (18₂) gehalterten Zylinderspule gebildet ist, und wobei der vierte Schwingungssensor (19₄) mittels eines am dritten Meßrohr (18₁) gehalterten Permanentmagneten und einer von dessen Magnetfeld durchfluteten, am vierten Meßrohr (18₂) gehalterten Zylinderspule gebildet ist.

11. In-Line-Meßgerät nach dem vorherigen Anspruch, wobei der zweite und vierte Schwingungssensor (19₂, 19₄) elektrisch seriell verschaltet sind, derart, daß ein gemeinsames Schwingungsmeßsignal gemeinsame auslaßseitige Schwingungen des ersten und dritten Meßrohrs (18₁, 18₃) relativ zum zweiten und vierten Meßrohr (18₂, 18₄) repräsentiert.

12. In-Line-Meßgerät nach einem der vorherigen Ansprüche,
- wobei jeder der beiden Strömungsteiler (20₁, 20₂) jeweils eine Masse von mehr als 20 kg, insb. von mehr als 40 kg, aufweist; und/oder
- wobei eine Leermasse, M₁₈, des ersten Meßrohrs, insb. jedes der Meßrohre (18₁, 18₂, 18₃, 18₄), größer als 20 kg, insb. größer als 30 kg und/oder kleiner als 50 kg, ist; und/oder
- wobei ein Massenverhältnis, M₁₁/M₁₈, einer Leermasse, M₁₁, des gesamten Meßaufnehmers zu einer Leermasse, M₁₈, des ersten Meßrohrs größer als 10, insb. größer als 15 und kleiner als 25, ist.

13. In-Line-Meßgerät nach einem der vorherigen Ansprüche,
- wobei eine Leermasse, M₁₁, des Meßaufnehmers größer als 200 kg, insb. größer als 300 kg, ist.

14. In-Line-Meßgerät nach Anspruch 4 und 13,
- wobei ein Masse-zu-Nennweite-Verhältnis, M₁₁/D₁₁, des Meßaufnehmers, definiert durch ein Verhältnis der Leermasse, M₁₁, des Meßaufnehmers zur nominellen Nennweite, D₁₁, des Meßaufnehmers kleiner als 2 kg/mm, insb. kleiner als 1 kg/mm und/oder größer als 0.5 kg/mm, ist, und
- wobei ein Nennweite-zu Einbaulänge-Verhältnis, D₁₁/L₁₁, des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist.

15. In-Line-Meßgerät nach einem der Ansprüche 13 bis 14,
- wobei das Aufnehmer-Gehäuse (7₁) im wesentlichen rohrförmig, insb. kreiszylindrisch, ausgebildet ist, und
- wobei das Aufnehmer-Gehäuse (7₁) einen größten Gehäuse-Innendurchmesser, D₇, aufweist, der größer als 150 mm, insb. größer als 250 mm, ist, insb. derart, daß ein Gehäuse-zu-Meßrohr-Innendurchmesser-Verhältnis, D₇/D₁₈, des Meßaufnehmers, definiert durch ein Verhältnis des größten Gehäuse-Innendurchmessers, D₇, zu einem Kaliber, D₁₈, des ersten Meßrohrs größer als 3 und kleiner als 5, ist, und/oder daß ein Gehäuse-Innendurchmesser-zu-Nennweite-Verhältnis, D₇/ D₁₁, des Meßaufnehmers, definiert durch ein Verhältnis des größten Gehäuse-Innendurchmessers, D₇, zur nominellen Nennweite, D₁₁, des Meßaufnehmers kleiner als 1.5 und größer als 0.9 ist.

16. In-Line-Meßgerät nach einem der vorherigen Ansprüche,
- wobei die vier Meßrohre (18₁, 18₂, 18₃, 18₄) hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich sind; und/oder
- wobei ein Material, aus dem die Rohrwände der vier Meßrohre (18₁, 18₂, 18₃, 18₄) zumindest anteilig bestehen, Titan und/oder Zirconium und/oder Duplexstahl und/oder Superduplexstahl ist; und/oder
- wobei das Aufnehmer-Gehäuse (7₁), die Strömungsteiler (20₁, 20₂) und Rohrwände der Meßrohre (18₁, 18₂, 18₃, 18₄) jeweils aus, insb. rostfreiem, Stahl bestehen.

17. In-Line-Meßgerät nach einem der vorherigen Ansprüche,
- wobei die vier Strömungsöffnungen (20_{1A}, 20_{1B}, 20_{1C}, 20₁₀) des ersten Strömungsteilers (20₂) so angeordnet sind, daß zu, insb. kreisförmigen, Querschnittsflächen der Strömungsöffnungen (20_{1A}; 20_{1B}; 20_{1C}; 20₁₀) des ersten Strömungsteilers (20₁) zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des ersten Strömungsteilers (20₁) liegen; und
- wobei die vier Strömungsöffnungen (20_{2A}, 20_{2B}, 20_{2C}, 20_{2D}) des zweiten Strömungsteilers (20₂) so angeordnet sind, daß zu, insb. kreisförmigen, Querschnittsflächen der Strömungsöffnungen (20_{2A}; 20_{2B}; 20_{2C}; 20_{2D}) des zweiten Strömungsteilers (20₂) zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des zweiten Strömungsteilers (20₂) liegen.

18. In-Line-Meßgerät nach einem der vorherigen Ansprüche, wobei die Erregeranordnung (5) mittels eines, insb. elektrodynamischen und/oder Schwingungen des ersten Meßrohrs (18₁) relativ zum zweiten Meßrohr (18₂) differentiell anregenden, ersten Schwingungserregers (5₁) gebildet ist.

19. In-Line-Meßgerät nach dem vorherigen Anspruch, wobei die Erregeranordnung mittels eines, insb. elektrodynamischen und/oder Schwingungen des dritten Meßrohrs (18₃) relativ zum vierten Meßrohr (18₄) differentiell anregenden, zweiten Schwingungserregers (5₂) gebildet ist, insb. derart, daß der erste und zweite Schwingungserreger (5₁, 5₂) elektrisch seriell verschaltet sind, so daß ein gemeinsames Treibersignal gemeinsame Schwingungen des ersten und dritten Meßrohrs (18₁, 18₃) relativ zum zweiten und vierten Meßrohr (18₂, 18₄) anregt, und/oder derart, daß der erste Schwingungserreger (5₁) mittels eines am ersten Meßrohr (18₁) gehalterten Permanentmagneten und einer von dessen Magnetfeld durchfluteten, am zweiten Meßrohr (18₂) gehalterten Zylinderspule und der zweite Schwingungserreger (5₂) mittels eines am dritten Meßrohr (18₁) gehalterten Permanentmagneten und einer von dessen Magnetfeld durchfluteten, am vierten Meßrohr (18₂) gehalterten Zylinderspule gebildet sind.

## Claims

1. In-line measuring device designed to measure a mass flow rate, particularly a total mass flow rate totalized over a time interval, of a medium flowing at least temporarily through a pipe, at a mass flow rate greater than 2200 t/h, particularly a gas, a liquid, a powder or another flowable substance, wherein said in-line measuring device, which is particularly designed as a compact device, comprises a vibronic-type sensor to generate Coriolis forces serving to measure a mass flow rate of the flowable medium conducted in a pipe, and a measuring device electronics unit that is electrically coupled to the sensor - particularly in a mechanically rigid manner - wherein said sensor comprises:
- a sensor housing (7₁), particularly essentially tubular and/or circular cylindrical on the exterior, wherein a first housing end on the inlet side is formed by a first flow divider (20₁), located on the inlet side, wherein said flow divider is designed as an integral part of the sensor housing (7₁) and has exactly four flow openings (20_{1A}, 20_{1B}, 20_{1C}, 20₁₀) that are spaced at a distance from one another and are particularly cylindrical, tapered or conical, and wherein a second housing end on the outlet side is formed by a second flow divider (20₂), located on the outlet side, wherein said flow divider is designed as an integral part of the sensor housing (7₁) and has exactly four flow openings (20_{2A}, 20_{2B}, 20_{2C}, 20_{2D}) that are spaced at a distance from one another and are particularly cylindrical, tapered or conical;
- precisely four straight measuring tubes (18₁, 18₂, 18₃, 18₄) that form flow paths which are coupled in parallel from a flow perspective and are connected to the flow dividers (20₁, 20₂), particularly identical in design, particularly measuring tubes that are solely supported in the sensor housing by said flow dividers (20₁, 20₂) in a manner that the tubes can vibrate and/or that are identical in design and/or that are parallel to one another at least in pairs, said tubes being designed to conduct flowing medium, wherein of said tubes
-- a first measuring tube (18₁), particularly circular cylindrical, enters into a first flow opening (20_{1A}) of the first flow divider (20₁) with a first measuring tube end on the inlet side and enters into a first flow opening (20_{2A}) of the second flow divider (20₂) with a second measuring tube end on the outlet side,
-- a second measuring tube (18₂), particularly circular cylindrical, enters into a second flow opening (20_{1B}) of first flow divider (20₁) with a first measuring tube end on the inlet side and enters into a second flow opening (20_{2B}) of the second flow divider (20₂) with a second measuring tube end on the outlet side,
-- a third measuring tube (18₃), particularly circular cylindrical, enters into a third flow opening (20_{1C}) of the first flow divider (20₁) with a first measuring tube end on the inlet side and enters into a third flow opening (20_{2C}) of the second flow divider (20₂) with a second measuring tube end on the outlet side,
-- a fourth measuring tube (18₄), particularly circular cylindrical, enters into a fourth flow opening (20_{1D}) of the first flow divider (20₁) with a first measuring tube end on the inlet side and enters into a fourth flow opening (20_{2D}) of the second flow divider (20₂) with a second measuring tube end on the outlet side;
- several annular reinforcement elements (22_{1A}, 22_{1B}, 22_{1C}, 22_{1D}, 22_{2A}, 22_{2B}, 22_{2C}, 22_{2D}, 22_{3A}, 22_{3B}, 22_{3C}, 22_{3D}, 22_{4A}, 22_{4B}, 22_{4C}, 22_{4D}), particularly identical in design, serving to improve the vibration quality of the measuring tubes (18₁, 18₂, 18₃, 18₄), wherein each of said reinforcement elements is mounted on precisely one of the measuring tubes (18₁, 18₂, 18₃, 18₄) in such a way that it surrounds said tube along one of its circumferential lines;
- an electromechanical exciter arrangement (5), particularly formed by electrodynamic vibration exciters (5₁, 5₂), said arrangement being designed to generate and/or maintain mechanical vibrations, particularly flexural vibrations, of the four measuring tubes (18₁, 18₂, 18₃, 18₄), wherein the exciter arrangement is designed in such a way that, during operation, the first measuring tube (18₁) and the second measuring tube (18₂) are excited to perform anti-phase flexural vibrations in a common imaginary first vibration plane (XZ₁) and, during operation, the third measuring tube (18₃) and the fourth measuring tube (18₄) are excited to perform anti-phase flexural vibrations in a common imaginary second vibration plane (XZ₂), said second plane particularly being essentially parallel to the first vibration plane (XZ₁), as well as
- a sensor arrangement (19) reacting to vibrations, particularly to flexural vibrations generated by means of the exciter arrangement, of the measuring tubes (181, 182, 183, 184), said arrangement being particularly electrodynamic and/or formed by vibration sensors (191, 192, 193, 194) that are identical in design, and wherein said arrangement is designed to generate vibration measuring signals representing vibrations, particularly flexural vibrations, of the measuring tubes (18₁₇ 18₂, 18₃, 18₄),
-- wherein the sensor arrangement (19) is formed by a first vibration sensor (19₁) located on the inlet side, particularly electrodynamic, which measures vibrations of the first measuring tube (18₁) in a differential manner in relation to the second measuring tube (18₂), and by a second vibration sensor (19₂) located on the outlet side, particularly electrodynamic, which measures vibrations of the first measuring tube (18₁) in a differential manner in relation to the second measuring tube (18₂)
-- and wherein the sensor arrangement (19) is formed by a third vibration sensor (19₃) located on the inlet side, particularly electrodynamic, which measures vibrations of the third measuring tube (18₃) in a differential manner in relation to the fourth measuring tube (18₄), and by a fourth vibration sensor (19₄) located on the outlet side, particularly electrodynamic, which measures vibrations of the third measuring tube (18₃) in a differential manner in relation to the fourth measuring tube (18₄),
- wherein a nominal diameter, D₁₁, of the sensor, which corresponds to a caliber of the pipe in the course of which the sensor should be inserted, is greater than 100 mm, particularly greater than 300 mm
- and wherein each of the four measuring tubes (18₁, 18₂, 18₃, 18₄), particularly tubes of the same caliber and/or of the same length, have a caliber, D₁₈, which is greater than 60 mm, particularly greater than 80 mm.

2. In-line measuring device as claimed in one of the previous claims,
- wherein a measurement length, L₁₉, of the sensor, corresponding to a minimum distance between the first vibration sensor (19₁) and the second vibration sensor (19₂), is greater than 500 mm, particularly greater than 600 mm and/or less than 1 200 mm, particularly in such a way that the ratio of the caliber to the measurement length, D₁₈/L₁₉, of the sensor, defined by a ratio of the caliber, D₁₈, of the first measuring tube to the measurement length, L₁₉, of the sensor, is greater than 0.05.

3. In-line measuring device as claimed in Claim 2, further comprising
- a first coupling element (24₁) of the first type, particularly plate-shaped, which is fixed on the inlet side at least on the first measuring tube and on the second measuring tube, for the formation of inlet-side nodes at least for vibrations, particularly flexural vibrations, of the first measuring tube and for anti-phase vibrations, particularly flexural vibrations, of the second measuring tube, at a distance from both the first flow divider and the second flow divider, and
- a second coupling element (24₂) of the first type, particularly plate-shaped and/or identical in design to the first coupling element (24₁) and/or parallel to the first coupling element (24₁), which is fixed on the outlet side at least on the first measuring tube and on the second measuring tube, for the formation of outlet-side nodes at least for vibrations, particularly flexural vibrations, of the first measuring tube and for anti-phase vibrations, particularly flexural vibrations, of the second measuring tube, at a distance from both the first flow divider and the second flow divider and also from the first coupling element,
- wherein a free vibration length, L₁₈ₓ, of the first measuring tube, particularly of each of the measuring tubes, which corresponds to a minimum distance between the first coupling element of the first type and the second coupling element of the first type, is less than 2500 mm, particularly less than 2000 mm and/or greater than 800 mm, particularly in such a way that a ratio of the measurement length to the vibration length, L₁₉/L₁₈ₓ, of the sensor, defined by a ratio of the measurement length, L₁₉, of the sensor to the free vibration length, L₁₈ₓ, of the first measuring tube, is greater than 0.6 and/or in such a way that a ratio of a caliber to the vibration length, D₁₈/L₁₈ₓ, of the sensor, defined by a ratio of the caliber, D₁₈, of the first measuring tube (18₁) to the free vibration length, L₁₈ₓ, of the first measuring tube (18₁), is greater than 0.07, particularly greater than 0.09 and/or less than 0.15.

4. In-line measuring device as claimed in one of the previous claims,
- wherein the first flow divider (20₁) has a flange (6₁) for the purpose of connecting the sensor to a pipe segment serving to supply medium to the sensor, and the second flow divider (20₂) has a flange (6₂) for the purpose of connecting the sensor to a pipe segment serving to take medium away from the sensor, and
- wherein each of the flanges (6₁, 6₂), particularly each having a mass of more than 50 kg, has a sealing surface (6_{1A}, 6_{2A}) designed to connect, in a fluid-tight manner, the sensor with the corresponding segment of the pipe, and wherein a distance between the sealing surfaces (6_{1A}, 6_{2A}) of the two flanges (6₁, 6₂) defines an installation length, L₁₁, of the sensor, which is particularly greater than 1200 mm and/or less than 3000 mm.

5. In-line measuring device as claimed in Claim 2 and 4,
- wherein a ratio of the caliber to the installation length, D₁₈/L₁₁, of the sensor, defined by a ratio of the caliber, D₁₈, of the first measuring tube to the installation length, L₁₁, of the sensor, is greater than 0.02, particularly greater than 0.05 and/or less than 0.09; and/or
- wherein a ratio of the measurement length to the installation length, L₁₉/L₁₁, of the sensor, defined by a ratio of the measurement length, L₁₉, to the installation length, L₁₁, of the sensor, is greater than 0.3, particularly greater than 0.4 and/or less than 0.7.

6. In-line measuring device as claimed in Claim 3 and 4, wherein a ratio of the vibration length to the installation length, L₁₈ₓ/L₁₁, of the sensor, defined by a ratio of the free vibration length, L₁₈ₓ, of the first measuring tube to the installation length, L₁₁, of the sensor, is greater than 0.55, particularly greater than 0.6 and/or less than 0.9.

7. In-line measuring device as claimed in one of the Claims 4 to 6,
- wherein a measuring tube length, L₁₈, - corresponding to a minimum distance between the first flow opening (20_{1A}) of the first flow divider (20₁) and the first flow opening (20_{2A}) of the second flow divider (20₂) - of the first measuring tube (18₁) is greater than 1000 mm, particularly greater than 1200 mm and/or less than 2000 mm, and
- wherein a ratio of the measuring tube length to the installation length, L₁₈/L₁₁, of the sensor, defined by a ratio of the measuring tube length, L₁₈, of the first measuring tube to the installation length, L₁₁, of the sensor, is greater than 0.7, particularly greater than 0.8 and/or less than 0.95.

8. In-line measuring device as claimed in one of the Claims 3 to 7, further comprising
- a third coupling element (24₃) of the first type, particularly plate-shaped, which is fixed on the inlet side at least on the third measuring tube (18₃) and on the fourth measuring tube (18₄), for the formation of inlet-side nodes at least for vibrations, particularly flexural vibrations, of the third measuring tube (18₃) and for anti-phase vibrations, particularly flexural vibrations, of the fourth measuring tube (18₄), at a distance from both the first flow divider and the second flow divider, and
- a fourth coupling element (24₄) of the first type, particularly plate-shaped, which is fixed on the outlet side at least on the third measuring tube (18₃) and on the fourth measuring tube (18₄), for the formation of outlet-side nodes at least for vibrations, particularly flexural vibrations, of the third measuring tube (18₃) and for anti-phase vibrations, particularly flexural vibrations, of the fourth measuring tube (18₄), at a distance from both the first flow divider and the second flow divider as well as from the third coupling element of the first type,
- wherein the third coupling element of the first type is fixed on both the first measuring tube and the second measuring tube at a distance from the first and the second coupling element of the first type, and wherein the fourth coupling element of the first type is fixed on both the first measuring tube and the second measuring tube at a distance from the first and the second coupling element of the first type,
- wherein a center of mass of the first coupling element of the first type has a distance in relation to a center of mass of the sensor that is essentially equal to a distance of a center of mass of the second coupling element of the first type in relation to said center of mass of the sensor,
- wherein a center of mass of the third coupling element of the first type has a distance in relation to the center of mass of the sensor that is essentially equal to a distance of a center of mass of the fourth coupling element of the first type in relation to said center of mass of the sensor, and
- wherein a distance between the center of mass of the third coupling element of the first type and the center of mass of the sensor is greater than a distance between the center of mass of the first coupling element of the first type and said center of mass of the sensor and greater than a distance between the center of mass of the second coupling element of the first type and said center of mass of the sensor.

9. In-line measuring device as claimed in one of the Claims 3 to 8,
- said sensor further comprising:
-- a first coupling element (25₁) of the second type, particularly plate-shaped or rod-shaped, which - for the purpose of synchronizing vibrations, particularly flexural vibrations, of the first measuring tube (18₁) and vibrations, particularly flexural vibrations, of the same frequency as those of the first measuring tube (18₁), of the third measuring tube (18₃) - is fixed solely on the first measuring tube (18₁) and on the third measuring tube (18₃) at a distance from both the first coupling element (24₁) of the first type and the second coupling element (24₂) of the first type, and
-- a second coupling element (25₂) of the second type, particularly plate-shaped or rod-shaped, which - for the purpose of synchronizing vibrations, particularly flexural vibrations, of the second measuring tube (18₂) and vibrations, particularly flexural vibrations, of the same frequency as those of the second measuring tube (18₂), of the fourth measuring tube (18₄) - is fixed solely on the second measuring tube (18₂) and on the fourth measuring tube (18₄) at a distance from both the first coupling element (24₁) of the first type and the second coupling element (24₂) of the first type and also from the first coupling element (25₁) of the second type; and/or
- wherein at least four annular reinforcement elements (22_{1A}, 22_{1B}, 22_{1C}, 22_{1D}, 22_{2A}, 22_{2B}, 22_{2C}, 22_{2D}, 22_{3A}, 22_{3B}, 22_{3C}, 22_{3D}, 22_{4A}, 22_{4B}, 22_{4C}, 22_{4D}), which are particularly identical in design, are mounted on each of the measuring tubes (18₁, 18₂, 18₃, 18₄), and wherein the reinforcement elements are placed in the sensor in such a way that two adjacent reinforcement elements mounted on the same measuring tube have a distance in relation to one another that is at least equal to 70 % of a tube outer diameter, D₁₈ₐ, of said measuring tube (18₁, 18₂, 18₃, 18₄), but at maximum is equal to 150 % of said tube outer diameter, D₁₈ₐ, particularly a distance in the range of 80 % to 120 % of said tube outer diameter.

10. In-line measuring device as claimed in one of the previous claims,
- wherein the first and the third vibration sensor (19₁, 19₃) are electrically coupled in series in such a way that a common vibration measuring signal represents common inlet-side vibrations of the first and of the third measuring tube (18₁, 18₃) relative to the second and fourth measuring tube (18₂, 18₄); and/or
- wherein the first vibration sensor (19₁) is formed by a permanent magnet fixed on the first measuring tube (18₁) and a cylinder coil which is fixed on the second measuring tube (18₂) and through which the magnet's magnetic field passes, and wherein the second vibration sensor (19₂) is formed by a permanent magnet fixed on the first measuring tube (18₁) and a cylinder coil which is fixed on the second measuring tube (18₂) and through which the magnet's magnetic field passes; and/or
- wherein the third vibration sensor (19₃) is formed by a permanent magnet fixed on the third measuring tube (18₃) and a cylinder coil which is fixed on the fourth measuring tube (18₄) and through which the magnet's magnetic field passes, and wherein the fourth vibration sensor (19₄) is formed by a permanent magnet fixed on the third measuring tube (18₃) and a cylinder coil which is fixed on the fourth measuring tube (18₄) and through which the magnet's magnetic field passes.

11. In-line measuring device as claimed in the previous claim, wherein the second and the fourth vibration sensor (19₂, 19₄) are electrically coupled in series in such a way that a common vibration measuring signal represents common outlet-side vibrations of the first and of the third measuring tube (18₁, 18₃) relative to the second and fourth measuring tube (18₂, 18₄).

12. In-line measuring device as claimed in one of the previous claims,
- wherein each of the two flow dividers (20₁, 20₂) each has a mass of more than 20 kg, particularly more than 40 kg; and/or
- wherein an empty mass, M₁₃, of the first measuring tube, particularly of each of the measuring tubes (18₁, 18₂, 18₃, 18₄), is greater than 20 kg, particularly greater than 30 kg and/or less than 50 kg; and/or
- wherein a mass ratio, M₁₁/M₁₃, defined by a ratio of an empty mass, M₁₁, of the entire sensor to an empty mass, M₁₃, of the first measuring tube, is greater than 10, particularly greater than 15 and less than 25.

13. In-line measuring device as claimed in one of the previous claims,
- wherein an empty mass, M₁₁, of the sensor is greater than 200 kg, particularly greater than 300 kg.

14. In-line measuring device as claimed in Claim 4 and 13,
- wherein a ratio of the mass to the nominal diameter, M₁₁/D₁₁, of the sensor, defined by a ratio of the empty mass, M₁₁, of the sensor to the nominal diameter, D₁₁, of the sensor, is less than 2 kg/mm, particularly less than 1 kg/mm and/or greater than 0.5 kg/mm, and
- wherein a ratio of the nominal diameter to the installation length, D₁₁/L₁₁, of the sensor, defined by a ratio of the nominal diameter of the sensor to the installation length of the sensor, is less than 0.3, particularly less than 0.2 and/or greater than 0.1.

15. In-line measuring device as claimed in one of the Claims 13 to 14,
- wherein the sensor housing (7₁) is essentially tubular, particularly circular cylindrical,
- wherein the sensor housing (7₁) has a maximum housing interior diameter, D₇, which is greater than 150 mm, particularly greater than 250 mm, particularly in such a way that a ratio of the interior diameter of the housing to the interior diameter of the measuring tube, D₇/D₁₈, of the sensor, defined by a ratio of the maximum interior diameter of the housing, D₇, to a caliber, D₁₈, of the first measuring tube, is greater than 3 and less than 5, and/or in such a way that a ratio of the interior diameter of the housing to the nominal diameter, D₇/D₁₁, of the sensor, defined by a ratio of the maximum interior diameter of the housing, D₇, to the nominal diameter, D₁₁, of the sensor is less than 1.5 and greater than 0.9.

16. In-line measuring device as claimed in one of the previous claims,
- wherein the four measuring tubes (18₁, 18₂, 18₃, 18₄) are identical in design with regard to a material from which their pipe walls are made, and/or with regard to their geometrical tube dimensions, particularly a tube length, a tube wall thickness, a tube outer diameter and/or a caliber; and/or
- wherein a material from which the walls of the four measuring tubes (18₁, 18₂, 18₃, 18₄) are at least partially made constitutes titanium and/or zirconium and/or duplex steel and/or superduplex steel; and/or
- wherein the sensor housing (7₁), the flow dividers (20₁, 20₂) and the walls of the measuring tubes (18₁, 18₂, 18₃, 18₄) are made from steel, particularly stainless steel.

17. In-line measuring device as claimed in one of the previous claims,
- wherein the four flow openings (20_{1A}, 20_{1B}, 20_{1C}, 20_{1D}) of the first flow divider (20₁) are arranged in such a way that imaginary centroids pertaining to cross-sectional areas, particularly circular, of the flow openings (20_{1A}, 20_{1B}, 20_{1C}, 20_{1D}) of the first flow divider (20₁) form the corners of an imaginary square, wherein said cross-sectional areas are located on a common imaginary sectional plane of the first flow divider (20₁), said plane being perpendicular to a longitudinal axis of the sensor, particularly parallel to a primary flow axis of the sensor; and
- wherein the four flow openings (20_{2A}, 20_{2B}, 20_{2C}, 20_{2D}) of the second flow divider (20₂) are arranged in such a way that imaginary centroids pertaining to cross-sectional areas, particularly circular, of the flow openings (20_{2A}, 20_{2B}, 20_{2C}, 20_{2D}) of the second flow divider (20₂) form the corners of an imaginary square, wherein said cross-sectional areas are located on a common imaginary sectional plane of the second flow divider (20₂), said plane being perpendicular to a longitudinal axis of the sensor, particularly parallel to a primary flow axis of the sensor.

18. In-line measuring device as claimed in one of the previous claims, wherein the exciter arrangement (5) is formed by a first vibration exciter (5₁), particularly electrodynamic and/or which excites vibrations of the first measuring tube (18₁) in a differential manner in relation to the second measuring tube (18₂).

19. In-line measuring device as claimed in the previous claim, wherein the exciter arrangement is formed by a second vibration exciter (5₂), particularly electrodynamic and/or which excites vibrations of the third measuring tube (18₃) in a differential manner in relation to the fourth measuring tube (18₄), particularly in such a way that the first and the second vibration exciter (5₁, 5₂) are electrically connected in series such that a common driver signal excites common vibrations of the first and third measuring tube (18₁, 18₃) in relation to the second and fourth measuring tube (18₂, 18₄), and/or in such a way that the first vibration exciter (5₁) is formed by a permanent magnet fixed on the first measuring tube (18₁) and a cylinder coil which is fixed on the second measuring tube (18₂) and through which the magnet's magnetic field passes, and in such a way that the second vibration exciter (5₂) is formed by a permanent magnet fixed on the third measuring tube (18₃) and a cylinder coil which is fixed on the fourth measuring tube (18₄) and through which the magnet's magnetic field passes.

## Revendications

1. Appareil de mesure en ligne destiné à la mesure d'un débit massique, notamment également d'un débit massique total totalisé sur un intervalle de temps, d'un produit s'écoulant au moins temporairement dans une conduite, avec un débit massique supérieur à 2 200 t/h, notamment un gaz, un liquide, une poudre ou une autre substance apte à s'écouler, lequel appareil de mesure en ligne, notamment conçu en tant qu'appareil compact, comprend un capteur du type à vibrations générant des forces de Coriolis servant à la mesure d'un débit massique du produit apte à s'écouler dans une conduite, ainsi qu'une électronique d'appareil de mesure couplée électriquement - notamment également reliée mécaniquement de manière rigide - avec le capteur, lequel capteur comprend :
- un boîtier de capteur (7₁), notamment pour l'essentiel tubulaire et/ou cylindrique circulaire à l'extérieur, dont une première extrémité de boîtier côté entrée est constituée d'un premier diviseur de débit (20₁), côté entrée, comportant exactement quatre ouvertures d'écoulement (20_{1A}, 20_{1B}, 20_{1C}, 20₁₀) espacées les unes des autres, notamment cylindriques ou coniques, et dont une deuxième extrémité de boîtier côté sortie est constituée d'un deuxième diviseur de débit (20₂), côté sortie, comportant exactement quatre ouvertures d'écoulement (20_{2A}, 20_{2B}, 20_{2C}, 20_{2D}) espacées les unes des autres, notamment cylindriques ou coniques ;
- exactement quatre tubes de mesure (18₁, 18₂, 18₃, 18₄) droits, formant en terme d'écoulement des chemins d'écoulement commandés en parallèle, raccordés aux diviseurs de débit (20₁, 20₂), notamment supportés de manière apte à vibrer uniquement au moyen des mêmes diviseurs de débit (20₁, 20₂) et/ou de conception identique et/ou parallèles au moins par paires, lesquels tubes sont destinés à guider le produit en écoulement, parmi lesquels tubes
-- un premier tube de mesure (18₁), notamment cylindrique circulaire, débouche avec une première extrémité de tube, côté entrée, dans une première ouverture d'écoulement (20_{1A}) du premier diviseur de débit (20₁) et avec une deuxième extrémité de tube, côté sortie, dans une première ouverture d'écoulement (20_{2A}) du deuxième diviseur de débit (20₂),
-- un deuxième tube de mesure (18₂), notamment cylindrique circulaire, débouche avec une première extrémité de tube, côté entrée, dans une deuxième ouverture d'écoulement (20₁₈) du premier diviseur de débit (20₁) et avec une deuxième extrémité de tube, côté sortie, dans une deuxième ouverture d'écoulement (20_{2B}) du deuxième diviseur de débit (20₂),
-- un troisième tube de mesure (18₃), notamment cylindrique circulaire, débouche avec une première extrémité de tube, côté entrée, dans une troisième ouverture d'écoulement (20_{1C}) du premier diviseur de débit (20₁) et avec une deuxième extrémité de tube, côté sortie, dans une troisième ouverture d'écoulement (20_{2C}) du deuxième diviseur de débit (20₂),
-- un quatrième tube de mesure (18₄), notamment cylindrique circulaire, débouche avec une première extrémité de tube, côté entrée, dans une quatrième ouverture d'écoulement (20_{1D}) du premier diviseur de débit (20₁) et avec une deuxième extrémité de tube, côté sortie, dans une quatrième ouverture d'écoulement (20₂₀) du deuxième diviseur de débit (20₂) ;
- une pluralité d'éléments raidisseurs (22_{1A}, 22_{1B}, 22_{1C}, 22_{1D}, 22_{2A}, 22_{2B}, 22_{2C}, 22_{2D}, 22_{3A}, 22_{3B}, 22_{3C}, 22_{3D}, 22_{4A}, 22_{4B}, 22_{4C}, 22_{4D}) annulaires, notamment de conception identique, servant à améliorer la qualité des vibrations des tubes de mesure (18₁, 18₂, 18₃, 18₄), éléments parmi lesquels chacun d'entre eux est monté sur exactement un des tubes de mesure (18₁, 18₂, 18₃, 18₄) de telle sorte à entourer ce dernier le long d'une de ses lignes circonférentielles ;
- un circuit d'excitation électromécanique (5), notamment formé d'excitateurs de vibrations (5₁, 5₂) électrodynamiques, lequel circuit est destiné à la génération et/ou maintien des vibrations mécaniques, notamment des vibrations de flexion, des quatre tubes de mesure (18₁, 18₂, 18₃, 18₄), le circuit d'excitation étant conçu de telle sorte que, en fonctionnement, le premier tube de mesure (18₁) et le deuxième tube de mesure (18₂) puissent être excités en vibrations de flexion à phases opposées dans un premier plan de vibration imaginaire commun (XZ₁) et, en fonctionnement, le troisième tube de mesure (18₃) et le quatrième tube de mesure (18₄) puissent être excités en vibrations de flexion à phases opposées dans un deuxième plan de vibration imaginaire commun (XZ₂), lequel deuxième plan est notamment pour l'essentiel parallèle au premier plan de vibration (XZ₁) ; ainsi que
- un agencement de capteurs (19) réagissant aux vibrations, notamment aux vibrations de flexion, générées au moyen du circuit d'excitation, des tubes de mesure (18₁, 18₂, 18₃, 18₄), lequel agencement est notamment électrodynamique et/ou est constitué de capteurs de vibration (19₁, 19₂, 19₃, 19₄) de conception identique, et lequel agencement est destiné à la génération de signaux de mesure de vibration représentant les vibrations, notamment les vibrations de flexion, des tubes de mesure (18₁, 18₂, 18₃, 18₄),
-- l'agencement de capteurs (19) étant constitué d'un premier capteur de vibrations (19₁) côté entrée, notamment électrodynamique, qui mesure de manière différentielle les vibrations du premier tube de mesure (18₁) par rapport au deuxième tube de mesure (18₂), ainsi que d'un deuxième capteur de vibrations (19₂) côté sortie, notamment électrodynamique, qui mesure de manière différentielle les vibrations du premier tube de mesure (18₁) par rapport au deuxième tube de mesure (18₂)
-- et l'agencement de capteurs (19) étant constitué d'un troisième capteur de vibrations (19₃) côté entrée, notamment électrodynamique, qui mesure de manière différentielle les vibrations du troisième tube de mesure (18₃) par rapport au quatrième tube de mesure (18₄), ainsi que d'un quatrième capteur de vibrations (19₄) côté sortie, notamment électrodynamique, qui mesure de manière différentielle les vibrations du troisième tube de mesure (18₃) par rapport au quatrième tube de mesure (18₄),
- un diamètre nominal, D₁₁, du capteur - lequel diamètre correspond à un calibre de la conduite dans le tracé de laquelle le capteur doit être inséré - étant supérieur à 100 mm, notamment supérieur à 300 mm
- et chacun des quatre tubes de mesure (18₁, 18₂, 18₃, 18₄), notamment de même calibre et/ou de même longueur, présentant un calibre, D₁₈, qui est supérieur à 60 mm, notamment supérieur à 80 mm.

2. Appareil de mesure en ligne selon l'une des revendications précédentes,
- pour lequel une longueur de mesure, L₁₉, du capteur, correspondant à une distance minimale entre le premier capteur de vibrations (19₁) et le deuxième capteur de vibrations (19₂), est supérieure à 500 mm, notamment supérieure à 600 mm et/ou inférieure à 1 200 mm, notamment de telle sorte qu'un rapport entre le calibre et la longueur de mesure, D₁₈/L₁₉, du capteur, défini par un rapport entre le calibre, D₁₈, du premier tube de mesure et la longueur de mesure, L₁₉, du capteur, est supérieur à 0,05.

3. Appareil de mesure en ligne selon la revendication 2, comprenant en outre
- un premier élément de couplage (24₁) de premier type, notamment en forme de plaque, lequel élément est fixé - afin de former des nœuds de vibration côté entrée au moins pour les vibrations, notamment les vibrations de flexion, du premier tube de mesure et pour les vibrations en opposition de phase avec les vibrations du premier tube de mesure, notamment les vibrations de flexion, du deuxième tube de mesure - à la fois à distance du premier diviseur de débit et du deuxième diviseur de débit, côté entrée, au moins sur le premier tube de mesure et sur le deuxième tube de mesure, ainsi que
- un deuxième élément de couplage (24₂) de premier type, notamment en forme de plaque et/ou de conception identique au premier élément de couplage (24₁) et/ou parallèle au premier élément de couplage (24₁), lequel élément est fixé - afin de former des nœuds de vibration côté sortie au moins pour les vibrations, notamment les vibrations de flexion, du premier tube de mesure et pour les vibrations en opposition de phase avec les vibrations du premier tube de mesure, notamment les vibrations de flexion, du deuxième tube de mesure - à la fois à distance du premier diviseur de débit et du deuxième diviseur de débit et également du premier élément de couplage, côté sortie, au moins sur le premier tube de mesure et sur le deuxième tube de mesure,
- une longueur de vibration libre, L₁₈ₓ, du premier tube de mesure, notamment de chacun des tubes de mesure, laquelle longueur correspond à une distance minimale entre le premier élément de couplage de premier type et le deuxième élément de couplage de premier type, étant inférieure à 2 500 mm, notamment inférieure à 2 000 mm et/ou supérieure à 800 mm, notamment de telle sorte qu'un rapport entre la longueur de mesure et la longueur de vibration, L₁₉/L₁₈ₓ, du capteur, défini par un rapport entre la longueur de mesure, L₁₉, du capteur et la longueur de vibration libre, L₁₈ₓ, du premier tube de mesure, est supérieur à 0,6 et/ou de telle sorte qu'un rapport entre un calibre et la longueur de vibration, D₁₈/L₁₈ₓ, du capteur, défini par un rapport entre le calibre, D₁₈, du premier tube de mesure (18₁) et la longueur de vibration libre, L₁₈ₓ, du premier tube de mesure (18₁), est supérieur à 0,07, notamment supérieur à 0,09 et/ou inférieur à 0,15.

4. Appareil de mesure en ligne selon l'une des revendications précédentes,
- pour lequel le premier diviseur de débit (20₁) comporte une bride (6₁) destinée au raccordement du capteur à un segment de conduite servant à l'alimentation de produit vers le capteur, et le deuxième diviseur de débit (20₂) comporte une bride (6₂) destinée au raccordement du capteur à un segment de conduite servant à l'évacuation de produit du capteur, et
- chacune des brides (6₁, 6₂), notamment présentant chacune une masse de plus de 50 kg, présentant une surface d'étanchéité (6_{1A}, 6_{2A}) destinée au raccordement étanche au produit du capteur avec le segment respectivement correspondant de la conduite, et une distance entre les surfaces d'étanchéité (6_{1A}, 6_{2A}) des deux brides (6₁, 6₂) définissant une longueur de montage, L₁₁, du capteur, notamment supérieure à 1 200 mm et/ou inférieure à 3 000 mm.

5. Appareil de mesure en ligne selon la revendication 2 et 4,
- pour lequel un rapport entre le calibre et la longueur de montage, D₁₈/L₁₁, du capteur, défini par un rapport entre le calibre, D₁₈, du premier tube de mesure et la longueur de montage, L₁₁, du capteur, est supérieur à 0,02, notamment supérieur à 0,05 et/ou inférieur à 0,09 ; et/ou
- pour lequel un rapport entre la longueur de mesure et la longueur de montage, L₁₉/L₁₁, du capteur, défini par un rapport entre la longueur de mesure, L₁₉, et la longueur de montage, L₁₁, du capteur, est supérieur à 0,3, notamment supérieur à 0,4 et/ou inférieur à 0,7.

6. Appareil de mesure en ligne selon la revendication 3 et 4, pour lequel un rapport entre la longueur de vibration et la longueur de montage, L₁₈ₓ/L₁₁, du capteur, défini par un rapport entre la longueur de vibration libre, L₁₈ₓ, du premier tube de mesure et la longueur de montage, L₁₁, du capteur, est supérieur à 0,55, notamment supérieur à 0,6 et/ou inférieur à 0,9.

7. Appareil de mesure en ligne selon l'une des revendications 4 à 6,
- pour lequel une longueur de tube de mesure, L₁₈, - correspondant à une distance minimale entre la première ouverture d'écoulement (20_{1A}) du premier diviseur de débit (20₁) et la première ouverture d'écoulement (20_{2A}) du deuxième diviseur de débit (20₂), du premier tube de mesure (18₁) - est supérieure à 1 000 mm, notamment supérieure à 1 200 mm et/ou inférieure à 2 000 mm, et
- pour lequel un rapport entre la longueur de tube de mesure et la longueur de montage, L₁₈/L₁₁, du capteur, défini par un rapport entre la longueur de tube de mesure, L₁₈, du premier tube de mesure et la longueur de montage, L₁₁, du capteur, est supérieur à 0,7, notamment supérieur à 0,8 et/ou inférieur à 0,95.

8. Appareil de mesure en ligne selon l'une des revendications 3 à 7, comprenant en outre
- pour lequel un troisième élément de couplage (24₃) de premier type, notamment en forme de plaque, lequel élément est fixé - afin de former des nœuds de vibration côté entrée au moins pour les vibrations, notamment les vibrations de flexion, du troisième tube de mesure (18₃) et pour les vibrations en opposition de phase avec les vibrations du troisième tube de mesure, notamment les vibrations de flexion, du quatrième tube de mesure (18₄) - à la fois à distance du premier diviseur de débit et du deuxième diviseur de débit, côté entrée, au moins sur le troisième tube de mesure (18₃) et sur le quatrième tube de mesure (18₄), ainsi que
- un quatrième élément de couplage (24₄) de premier type, notamment en forme de plaque, lequel élément est fixé - afin de former des nœuds de vibration côté sortie au moins pour les vibrations, notamment les vibrations de flexion, du troisième tube de mesure (18₃) et pour les vibrations en opposition de phase avec les vibrations du troisième tube de mesure, notamment les vibrations de flexion, du quatrième tube de mesure (18₄) - à la fois à distance du premier diviseur de débit et du deuxième diviseur de débit et également du troisième élément de couplage de premier type, côté sortie, au moins sur le troisième tube de mesure (18₃) et sur le quatrième tube de mesure (18₄),
- pour lequel le troisième élément de couplage de premier type est fixé à la fois au premier tube de mesure et au deuxième tube de mesure à distance du premier et du deuxième élément de couplage de premier type, et le quatrième élément de couplage de premier type est fixé à la fois au premier tube de mesure et au deuxième tube de mesure à distance du premier et du deuxième élément de couplage de premier type,
- pour lequel un centre de masse du premier élément de couplage de premier type présente une distance par rapport à un centre de masse du capteur qui est pour l'essentiel égale à une distance d'un centre de masse du deuxième élément de couplage de premier type par rapport au même centre de masse du capteur,
- pour lequel un centre de masse du troisième élément de couplage de premier type présente une distance par rapport à un centre de masse du capteur qui est pour l'essentiel égale à une distance d'un centre de masse du quatrième élément de couplage de premier type par rapport au même centre de masse du capteur, et
- pour lequel une distance entre le centre de masse du troisième élément de couplage de premier type et le centre de masse du capteur est supérieure à une distance entre le centre de masse du premier élément de couplage de premier type et le centre de masse du capteur, et supérieure à une distance entre le centre de masse du deuxième élément de couplage de premier type et le centre de masse du capteur.

9. Appareil de mesure en ligne selon l'une des revendications 3 à 8,
- lequel capteur comprend en outre :
-- un premier élément de couplage (25₁) de second type, notamment en forme de plaque ou de tige, lequel élément est fixé - afin de synchroniser les vibrations, notamment les vibrations de flexion, du premier tube de mesure (18₁) et les vibrations, notamment les vibrations de flexion, de même fréquence que celles du premier tube de mesure (18₁), du troisième tube de mesure (18₃) - uniquement au premier tube de mesure (18₁) et au troisième tube de mesure (18₃) à la fois à distance du premier élément de couplage (24₁) de premier type et du deuxième élément de couplage (24₂) de premier type, ainsi que
-- un deuxième élément de couplage (25₂) de second type, notamment en forme de plaque ou de tige, lequel élément est fixé - afin de synchroniser les vibrations, notamment les vibrations de flexion, du deuxième tube de mesure (18₂) et les vibrations, notamment les vibrations de flexion, de même fréquence que celles du deuxième tube de mesure (18₂), du quatrième tube de mesure (18₄) - uniquement au deuxième tube de mesure (18₂) et au quatrième tube de mesure (18₄) à la fois à distance du premier élément de couplage (24₁) de premier type, du deuxième élément de couplage (24₂) de premier type et également du premier élément de couplage (25₂) de second type ; et/ou
- pour lequel sont disposés, sur chacun des tubes de mesure (18₁, 18₂, 18₃, 18₄), au moins quatre éléments raidisseurs (22_{1A}, 22_{1B}, 22_{1C}, 22_{1D}, 22_{2A}, 22_{2B}, 22_{2C}, 22_{2D}, 22_{3A}, 22_{3B}, 22_{3C}, 22_{3D}, 22_{4A}, 22_{4B}, 22_{4C}, 22_{4D}) annulaires, notamment de conception identique, et pour lequel les éléments raidisseurs sont placés dans le capteur de telle sorte que deux éléments raidisseurs adjacents montés sur le même tube de mesure sont à une distance l'un de l'autre qui est au moins égale à 70 % d'un diamètre extérieur de tube, D₁₈ₐ, du même tube de mesure (18₁, 18₂, 18₃, 18₄), mais au plus égale à 150 % dudit diamètre extérieur de tube, D₁₈ₐ, notamment une distance comprise entre 80 % et 120 % dudit diamètre extérieur de tube.

10. Appareil de mesure en ligne selon l'une des revendications précédentes,
- pour lequel le premier et le troisième capteur de vibrations (19₁, 19₃) sont couplés électriquement en série de telle sorte qu'un signal de mesure de vibration commun représente des vibrations communes côté entrée du premier et du troisième tube de mesure (18₁, 18₃) par rapport au deuxième et au quatrième tube de mesure (18₂, 18₄) ; et/ou
- pour lequel le premier capteur de vibrations (19₁) est constitué d'un aimant permanent fixé sur le premier tube de mesure (18₁) et une bobine cylindrique balayée par le champ de l'aimant permanent, fixée sur le deuxième tube de mesure (18₂), et pour lequel le deuxième capteur de vibrations (19₂) est constitué d'un aimant permanent fixé sur le premier tube de mesure (18₁) et une bobine cylindrique balayée par le champ de l'aimant permanent, fixée sur le deuxième tube de mesure (18₂) ; et/ou
- pour lequel le troisième capteur de vibrations (19₂) est constitué d'un aimant permanent fixé sur le troisième tube de mesure (18₃) et une bobine cylindrique balayée par le champ de l'aimant permanent, fixée sur le quatrième tube de mesure (18₄), et pour lequel le quatrième capteur de vibrations (19₄) est constitué d'un aimant permanent fixé sur le troisième tube de mesure (18₃) et une bobine cylindrique balayée par le champ de l'aimant permanent, fixée sur le quatrième tube de mesure (18₄).

11. Appareil de mesure en ligne selon la revendication précédente, pour lequel le deuxième et le quatrième capteur de vibrations (19₂, 19₄) sont couplés électriquement en série de telle sorte qu'un signal de mesure de vibration commun représente des vibrations communes côté sortie du premier et du troisième tube de mesure (18₁, 18₃) par rapport au deuxième et au quatrième tube de mesure (18₂, 18₄).

12. Appareil de mesure en ligne selon l'une des revendications précédentes,
- pour lequel chacun des deux diviseurs de débit (20₁, 20₂) présente respectivement une masse de plus de 20 kg, notamment de plus de 40 kg ; et/ou
- pour lequel une masse à vide, M₁₃, du premier tube de mesure, notamment de chacun des tubes de mesure (18₁, 18₂, 18₃, 18₄), est supérieure à 20 kg, notamment supérieure à 30 kg et/ou inférieure à 50 kg ; et/ou
- pour lequel un rapport de masses, M₁₁/M₁₈, défini par un rapport entre la masse à vide, M₁₁, du capteur complet et une masse à vide, M₁₃, du premier tube de mesure, est supérieur à 10, notamment supérieur à 15 et inférieur à 25.

13. Appareil de mesure en ligne selon l'une des revendications précédentes,
- pour lequel une masse à vide, M₁₁, du capteur est supérieure à 200 kg, notamment supérieure à 300 kg.

14. Appareil de mesure en ligne selon la revendication 4 et 13,
- pour lequel un rapport masse/diamètre nominal, M₁₁/D₁₁, du capteur, défini par un rapport entre la masse à vide, M₁₁, du capteur et le diamètre nominal, D₁₁, du capteur, est inférieur à 2 kg/mm, notamment inférieur à 1 kg/mm et/ou supérieur à 0,5 kg/mm, et
- pour lequel un rapport entre le diamètre nominal et la longueur de montage, D₁₁/L₁₁, du capteur, défini par un rapport entre le diamètre nominal du capteur et la longueur de montage du capteur, est inférieur à 0,3, notamment inférieur à 0,2 et/ou supérieur à 0,1.

15. Appareil de mesure en ligne selon l'une des revendications 13 à 14,
- pour lequel le boîtier de capteur (7₁) est pour l'essentiel tubulaire, notamment cylindrique circulaire,
- pour lequel le boîtier de capteur (7₁) présente un diamètre intérieur de boîtier le plus grand, D₇, qui est supérieur à 150 mm, notamment supérieur à 250 mm, notamment de telle sorte qu'un rapport entre le diamètre intérieur de boîtier et le diamètre intérieur de tube de mesure, D₇/D₁₈, du capteur, défini par un rapport entre le plus grand diamètre intérieur de boîtier, D₇, et un calibre, D₁₈, du premier tube de mesure, est supérieur à 3 et inférieur à 5, et/ou de telle sorte qu'un rapport entre le diamètre intérieur de boîtier et le diamètre nominal, D₇/D₁₁, du capteur, défini par un rapport entre le plus grand diamètre intérieur de boîtier, D₇, et le diamètre nominal, D₁₁, du capteur est inférieur à 1,5 et supérieur à 0,9.

16. Appareil de mesure en ligne selon l'une des revendications précédentes,
- pour lequel les quatre tubes de mesure (18₁, 18₂, 18₃, 18₄) sont constitués, concernant un matériau, de celui de leur parois de tube, et/ou concernant leurs dimensions de tube géométriques, notamment une longueur de tube, une épaisseur de paroi de tube, un diamètre extérieur de tube et/ou un calibre, sont de conception identique ; et/ou
- pour lequel un matériau avec lequel sont constituées au moins partiellement les parois de tube des quatre tubes de mesure (18₁, 18₂, 18₃, 18₄), est du titane et/ou du zirconium et/ou un acier duplex et/ou un acier superduplex ; et/ou
- pour lequel le boîtier de capteur (7₁), les diviseurs de débit (20₁, 20₂) et les parois des tubes de mesure (18₁, 18₂, 18₃, 18₄) sont respectivement constitués d'acier, notamment inoxydable.

17. Appareil de mesure en ligne selon l'une des revendications précédentes,
- pour lequel les quatre ouvertures d'écoulement (20_{1A}, 20_{1B}, 20_{1C}, 20₁₀) du premier diviseur de débit (20₁) sont disposées de telle sorte que des centres de gravité de surface imaginaires correspondant à des surfaces de section, notamment circulaires, des ouvertures d'écoulement (20_{1A}, 20_{1B}, 20_{1C}, 20₁₀) du premier diviseur de débit (20₁), forment les sommets d'un carré imaginaire, ces mêmes surfaces de section se trouvant dans un plan de coupe imaginaire commun du premier diviseur de débit (20₁), lequel plan est perpendiculaire à un axe longitudinal parallèle du capteur, notamment à un axe d'écoulement principal du capteur ; et
- pour lequel les quatre ouvertures d'écoulement (20_{2A}, 20_{2B}, 20_{2C}, 20_{2D}) du deuxième diviseur de débit (20₂) sont disposées de telle sorte que des centres de gravité de surface imaginaires correspondant à des surfaces de section, notamment circulaires, des ouvertures d'écoulement (20_{2A}, 20₂₈, 20_{2C}, 20_{2D}) du deuxième diviseur de débit (20₂), forment les sommets d'un carré imaginaire, ces mêmes surfaces de section se trouvant dans un plan de coupe imaginaire commun du deuxième diviseur de débit (20₂), lequel plan est perpendiculaire à un axe longitudinal parallèle du capteur, notamment à un axe d'écoulement principal du capteur.

18. Appareil de mesure en ligne selon l'une des revendications précédentes, pour lequel le circuit d'excitation électromécanique (5) est constitué d'un premier excitateur de vibrations (5₁), notamment électrodynamique et/ou qui excite en vibrations le premier tube de mesure (18₁) de manière différentielle par rapport au deuxième tube de mesure (18₂).

19. Appareil de mesure en ligne selon la revendication précédente, pour lequel le circuit d'excitation est constitué d'un deuxième excitateur de vibrations (5₂), notamment électrodynamique et/ou qui excite en vibrations le troisième tube de mesure (18₃) de manière différentielle par rapport au quatrième tube de mesure (18₄), notamment de telle sorte que le premier et le deuxième excitateur de vibrations (5₁, 5₂) sont couplés électriquement en série, si bien qu'un signal d'attaque commun excite des vibrations communes du premier et du troisième tube de mesure (18₁, 18₃) par rapport au deuxième et au quatrième tube de mesure (18₂, 18₄), et/ou de telle sorte que le premier excitateur de vibrations (5₁) est formé au moyen d'un aimant permanent fixé sur le premier tube de mesure (18₁) et d'une bobine cylindrique balayée par le champ de l'aimant permanent, fixée sur le deuxième tube de mesure (18₂), et de telle sorte que le deuxième excitateur de vibrations (5₂) est formé au moyen d'un aimant permanent fixé sur le troisième tube de mesure (18₃) et d'une bobine cylindrique balayée par le champ de l'aimant permanent, fixée sur le quatrième tube de mesure (18₄).
